# EUROPÄISCHE PATENTSCHRIFT

(11) **EP 1 980 474 B1**
(45) Veröffentlichungstag und Bekanntmachung des Hinweises auf die Patenterteilung: **21.09.2011**
(21) Anmeldenummer: 08005412.5
(22) Anmeldetag: 22.03.2008
(51) Int. Cl.: B62D 65/18, B65G 35/06

(54) **Skid zum Tragen eines Gegenstandes sowie Übergabestation für solche Skids**
Skid for carrying an object and transfer station for such skids
Skid destiné au transport d'un objet et station de transmission pour des tels skids

(30) Priorität: 13.04.2007 DE 102007017511
(43) Veröffentlichungstag der Anmeldung: 15.10.2008
(60) Teilanmeldung: 11001628.4
(73) Patentinhaber: Eisenmann AG, 71032 Böblingen (DE)
(72) Erfinder: Robbin, Jörg, 72119 Ammerbuch (DE); Ruggaber, Thomas, 72770 Reutlingen (DE)
(74) Vertreter: Schwanhäusser, Gernot

(56) Entgegenhaltungen:
- EP-A1- 0 738 673
- EP-A1- 1 232 967
- EP-A2- 0 345 826
- US-A- 5 669 309
- US-B1- 6 324 992
- US-B1- 6 415 721

## Beschreibung

Die Erfindung betrifft einen Skid zum Tragen wenigstens eines Gegenstandes, insbesondere einer Fahrzeugkarosserie, welcher in einer Förderrichtung innerhalb einer Förderanlage förderbar ist, mit wenigstens zwei zueinander parallelen Auflagekufen, wobei an dem Skid von den Auflagekufen verschiedene Laufmittel befestigt sind.

Derartige Skids werden insbesondere in der Automobilindustrie zum Transport von Fahrzeugkarosserien zwischen und teilweise auch in einzelnen Bearbeitungs- oder Behandlungsstationen innerhalb einer Förderanlage verwendet. Dabei arbeiten die Auflagekufen des Skids mit Fördermitteln, wie beispielsweise einem Bandförderer oder einem Rollenbahnförderer, zusammen.

In einer solchen Förderanlage kann es vorkommen, dass bis zu 400 und mehr Fahrzeugkarosserien gleichzeitig gefördert werden. Zu deren Antrieb ist eine Vielzahl von Antriebseinheiten, d.h. in der Regel Elektromotoren, notwendig.

Um einen gleichmäßigen Durchsatz der Anlage sicherzustellen, sind häufig Pufferbereiche vorgesehen, innerhalb derer mit einer Fahrzeugkarosserie beladene oder unbeladene Skids zwischen geparkt werden.

Üblicherweise entsprechen die Fördermittel innerhalb eines solchen Pufferbereichs den Fördermitteln eines Bearbeitungs- oder Behandlungsstationen verbindenden Förderbereichs.

Oben angesprochene Rollenbahnförderer, wie sie bereits in Förderanlagen verwendet werden, umfassen meist parallel verlaufende Profile aus Stahl, in welche Rollen eingelassen sind, auf denen der Skid mit seinen Auflagekufen aufliegt. Zum Fördern des Skids auf dem Rollenbahnförderer sind mehrere der Rollen angetrieben.

Insgesamt ist bei Rollenbahnförderern, und auch bei anderen bekannten Fördermitteln zum Fördern von Skids, eine verhältnismäßig große Menge an Stahl verbaut. Dies treibt insgesamt die Kosten einer solchen Förderanlage in die Höhe.

Auch die oben genannte hohe Anzahl von notwendigen Antriebseinheiten, welche bei einer Förderanlage üblicher Größe bei ca. 1 200 liegen kann, sorgt für hohe Investitionskosten.

Skids der eingangs genannten Art haben den Nachteil, dass sie stets nur mit ihren Auflagekufen mit Fördermitteln zusammenarbeiten können, welche dazu entsprechend viele Antriebseinheiten umfassen müssen. Soll eine bestehende Anlage erweitert oder verändert werden, so ist es notwendig, dass die dann verbauten Fördermittel mit denjenigen der bestehenden Anlage übereinstimmen. Alternative Fördermittel, welche weniger Material und/oder Antriebe benötigen, können nicht eingesetzt werden.

Darüber hinaus bilden Fördermittel häufig auch eine Führungsstruktur für einen Skid. Dies ist beispielsweise bei einem Rollenbahnförderer der Fall. Wie bereits angesprochen, ist ein Rollenbahnförderer baulich jedoch recht aufwändig. Es kann in einer Förderanlage jedoch Bereiche geben, in denen eine einfacher ausgebildete Führungsstruktur eingesetzt werden könnte, wenn der Skid nicht auf eine einzige Führungsstruktur beschränkt wäre.

Hierzu ist beispielsweise aus der US 6 324 992 B1 bekannt, als Laufmittel zusätzlich zu den Auflagekufen vier starr befestigte Laufräder vorzusehen, mit denen der Skid außerdem auf Schienen laufen kann. Damit ist die Möglichkeit gegeben, dass der Skid zum einen mit seinen Auflagekufen mit Fördermitteln und/oder einer Führungsstruktur einer ersten Art und mit seinen von diesen verschiedenen Laufmitteln mit Fördermitteln und/oder einer Führungsstruktur einer zweiten Art zusammenarbeiten kann. Wenn der aus der US 6 324 992 B1 bekannte Skid jedoch auf seinen Auflagekufen gefördert wird, so kann es vorkommen, dass die zusätzlichen Laufmittel im Weg sind, wenn von einer Seite her auf die Karosserie zugegriffen werden soll.

Aufgabe der Erfindung ist es, einen Skid zu schaffen, welcher variabler ist und mit baulich unterschiedlich ausgebildeten Fördermitteln und/oder Führungsstrukturen zusammenarbeiten kann. Im Zusammenhang damit sind Vorrichtungen wünschenswert, aufgrund derer ein solcher Skid auch in einer bestehenden Förderanlage unter Nutzung seiner Möglichkeiten verwendet werden kann. Insgesamt besteht Bedarf an einer Förderanlage, in welcher verschiedene Fördermittel und/oder Führungsstrukturen, die jeweils an einen bestimmten Einsatzbereich angepasst sind, mit einem Skid zusammenarbeiten können.

Diese Aufgabe wird bei einem Skid der eingangs genannten Art dadurch gelöst, dass die Laufmittel zwischen einer Ruhestellung und einer Betriebsstellung verstellbar sind.

Nehmen die Laufmittel ihre Ruhestellung ein, so ist der Skid in bekannter Weise auf seinen Auflagekufen förderbar, ohne dass die Laufmittel dabei stören. Nehmen die Laufmittel ihre Betriebsstellung ein, so kann der Skid mittels der an die Laufmittel angepassten Fördermittel gefördert werden.

Vorteilhafte Weiterbildungen des Skids sind in den abhängigen Ansprüchen angegeben.

Sind die Laufmittel im Betrieb unterhalb der Auflagekufen angeordnet, so besteht in vorteilhafter Weise die Möglichkeit, zwei Fördermittel miteinander zu kombinieren, welche den Skid auf unterschiedlichen Förderniveaus transportieren. Eine gegebenenfalls notwendige Führungsstruktur, die mit den Laufmitteln zusammenarbeitet, kann beispielsweise am Boden der Förderanlage angebracht oder durch den Boden selbst gebildet sein.

Es ist insbesondere vorteilhaft, wenn die Laufmittel als eine Mehrzahl von Laufrädern ausgebildet sind, auf welchen der Skid verfahrbar ist. Durch Laufräder kann der Skid entweder frei fahrend oder mittels eines Schienensystems geführt gefördert werden. Insbesondere kann der Skid mittels der Laufräder über den Boden der Förderanlage fahren.

Für die Verstellbarkeit der Laufräder zwischen einer Ruhestellung und einer Betriebsstellung ist es günstig, wenn jedes Laufrad an einem Endbereich eines Schwenkholms angebracht ist, welcher an seinem gegenüberliegenden Endbereich verschwenkbar am Skid gelagert ist. Dabei ist es insbesondere günstig, wenn der Schwenkholm um eine senkrecht zur Förderrichtung und parallel zu einer durch die Auflagekufen vorgegebene Ebene verlaufende Achse verschwenkbar am Skid gelagert ist. Alternativ dazu ist es auch möglich, dass der Schwenkholm um eine Achse verschwenkbar ist, die parallel zur Förderrichtung verläuft. Im Hinblick auf eine von außen herbeigeführte Verschwenkbewegung zwischen der Ruhestellung und der Betriebsstellung eines Laufrads ist es vorteilhaft, wenn wenigstens ein Fahrwerk vorgesehen ist, welches zwei Schwenkholme mit jeweils zugehörigem Laufrad umfasst, wobei die zwei Schwenkholme des Fahrwerks starr miteinander verbunden sind. Insbesondere sind die beiden Schwenkholme in einer Richtung senkrecht zur Förderrichtung nebeneinander angeordnet. Durch die Verbindung der beiden Schwenkholme miteinander ist es ausreichend, wenn einer der Schwenkholme bewegt wird, um ihn von seiner Ruhestellung in seine Betriebsstellung oder umgekehrt zu überführen, da der weitere Schwenkholm durch die starre Verbindung automatisch der Bewegung des ersten Schwenkholmes folgt.

Wenn die Radachse wenigstens eines Laufrads in dessen Betriebsstellung um eine Achse verdrehbar ist, die senkrecht auf einer durch die Auflagekufen vorgegebene Ebene steht, ist der Skid vorteilhaft in der Lage, auch Kurvenfahrten durchzuführen. Rangiervorgänge werden dadurch erleichtert.

Für einen sicheren Betrieb des Skids ist es hilfreich, wenn wenigstens eine Rasteinrichtung für zumindest ein Laufrad vorgesehen ist, mittels welcher das entsprechende Laufrad wahlweise in seiner Ruhestellung oder in seiner Betriebsstellung arretierbar ist.

Um Antriebsmittel einzusparen, ist es vorteilhaft, wenn in Förderrichtung gesehen an jedem Ende des Skids ein Teil einer Kupplungseinrichtung vorgesehen ist, so dass mehrere Skids lösbar zu einem Verband verbindbar sind, in welchem die Skids in Förderrichtung gesehen hintereinander angeordnet sind. Auf diese Weise besteht die Möglichkeit, dass mehrere miteinander gekoppelte Skids mittels eines einzigen Antriebs angetrieben werden. Somit können unter Umständen Antriebseinheiten gespart werden.

Um dem Grundgedanken eines Skids, welches mit zwei unterschiedlich ausgebildeten Fördermitteln und/oder Führungsstrukturen zusammenarbeiten kann, Rechnung zu tragen, ist ferner Gegenstand der Erfindung eine Übergabestation für einen Skid zur Übergabe des Skids von Fördermitteln, welche mit den Auflagekufen des Skids zusammenwirken, zu einer Führungsstruktur, welche mit den Laufmitteln des Skids zusammenwirkt. Beispielsweise kann es sich bei den Fördermitteln um einen eingangs erwähnten Rollenbahnförderer und bei der Führungsstruktur um ein Schienensystem handeln.

Für das Zusammenspiel der Übergabestation mit einem Skid ist es vorteilhaft, wenn bei der Übergabestation wenigstens eine Verstelleinrichtung vorgesehen ist, mittels welcher die Laufmittel eines Skids von einer Ruhestellung in eine Betriebsstellung oder umgekehrt überführbar sind. Auf diese Weise dient die Übergabestation quasi als Schnittstelle zwischen einer ersten Art von Fördermitteln, welche mit den Auflagekufen des Skids zusammenwirken, und einer anderen Art von Fördermitteln und/oder einer Führungsstruktur, welche mit den Laufmitteln des Skids in ihrer Betriebsstellung zusammenwirken.

Es ist günstig, wenn die Übergabestation Auflagerollen aufweist, über welche der Skid mit seinen Auflagekufen verfahrbar ist. Dies entspricht in der Ausgestaltung im wesentlichen einem Rollenbahnförderer, wobei hier auf angetriebene Rollen verzichtet werden kann.

Nachstehend werden Ausführungsbeispiele der Erfindung anhand der Zeichnungen näher erläutert.

In diesen zeigen:
- Figur 1: eine perspektivische Darstellung eines mehrere Funktionsbereiche umfassenden Teils einer Förder anlage, wobei mehrere Skids und mehrere separate Antriebseinheiten gezeigt sind;
- Figur 2: eine perspektivische Darstellung eines Skids auf einem Rollenbahnförderer;
- Figur 3: eine perspektivische Darstellung des Skids nach Figur 2 innerhalb eines Pufferbereichs der Förderanlage nach Figur 1, welcher mit einer separaten Antriebseinheit gekoppelt ist;
- Figur 4: eine perspektivische Darstellung des Skids nach Figur 3 am Übergang zwischen dem Pufferbereich und einer Übergabestation;
- Figur 5: eine perspektivische Teilansicht des Skids und der Übergabestation, wobei der Skid in einer ersten Position beim Auffahren auf die Übergabestation gezeigt und ein schwenkbares Laufrad in einer Betriebsstellung zu erkennen ist;
- Figuren: 6A und 6B vergrößerte Seitenansichten eines Rastmechanismus zum Arretieren des schwenkbaren Laufrads des Skids in seiner Betriebsstellung oder in einer Ruhestellung;
- Figur 7: aus einer gegenüber Figur 5 anderen Blickrichtung eine perspektivische Teilansicht des dort gezeigten Skids in einer zweiten Position beim Auffahren auf die Übergabestation, wobei das schwenkbare Laufrad eine Zwischenstellung einnimmt;
- Figur 8: aus einer gegenüber den Figuren 5 und 7 anderen Blickrichtung eine perspektivische Teilansicht des dort gezeigten Skids in einer dritten Position beim Auffahren auf die Übergabestation, wobei das schwenkbare Laufrad seine Ruhestellung einnimmt;
- Figur 9: eine perspektivische Teilansicht des Skids in einer ersten Position beim Abfahren von der Übergabestation, wobei das schwenkbare Laufrad noch seine Ruhestellung einnimmt;
- Figur 10: aus einer gegenüber Figur 9 anderen Blickrichtung eine perspektivische Teilansicht des dort gezeigten Skids in einer zweiten Position beim Abfahren von der Übergabestation, wobei das schwenkbare Laufrad eine Zwischenstellung einnimmt;
- Figur 11: aus einer gegenüber den Figuren 9 und 10 anderen Blickrichtung eine perspektivische Teilansicht des dort gezeigten Skids in einer dritten Position beim Abfahren von der Übergabestation, wobei das schwenkbare Laufrad seine Betriebsstellung einnimmt;
- Figur 12: in vergrößerter perspektivischer Darstellung eine Teilansicht des in den Figuren 9 bis 11 gezeigten Skids, nachdem der Verschwenkvorgang abgeschlossen ist;
- Figur 13: eine perspektivische Darstellung einer Kupplung, welche zwei Skids lösbar miteinander verbindet;
- Figur 14: eine perspektivische Darstellung einer schienengeführten separaten Antriebseinheit zum Antreiben des Skids;
- Figur 15: eine perspektivische Darstellung einer frei fahrenden separaten Antriebseinheit zum Antreiben des Skids;
- Figuren: 16A, 16B und 16C eine perspektivische Darstellung eines Koppelmechanismus zum Koppeln der separaten Antriebseinheit mit dem Skid, wobei zwei Paddel in einer ersten, zweiten bzw. dritten Stellung gezeigt sind;
- Figur 17: eine perspektivische Darstellung eines ersten Ausführungsbeispiels einer Behandlungsstation der Förderanlage von Figur 1 in Form eines Trockners, innerhalb welchem der Skid mit den Laufrädern in Ruhestellung auf Auflagekufen auf einer Rollenbahn geführt ist; und
- Figur 18: eine perspektivische Darstellung eines weiteren Ausführungsbeispiels des Trockners von Figur 17, wobei der Skid dort auf seinen Laufrädern in ihrer Betriebsstellung auf dem Boden fährt.

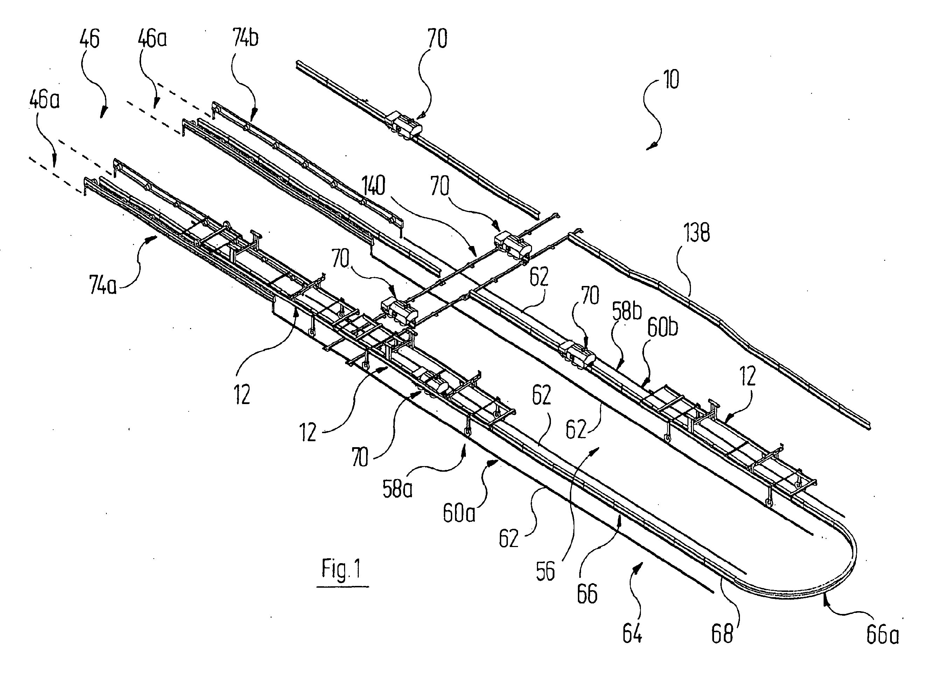

Figur 1 zeigt einen Teil einer insgesamt mit 10 bezeichneten Förderanlage, mittels welcher hier nicht dargestellte Fahrzeugkarosserien zwischen und teilweise auch innerhalb von einzelnen Bearbeitungs- oder Behandlungsstationen, wie Rohbau, Lackier- und Montagestationen, transportiert werden.

Die Fahrzeugkarosserien werden dazu auf jeweils einem Transportgestell 12, welches nachfolgens als "Skid" bezeichnet wird, befestigt, wobei in Figur 1 drei Skids 12 gezeigt sind.

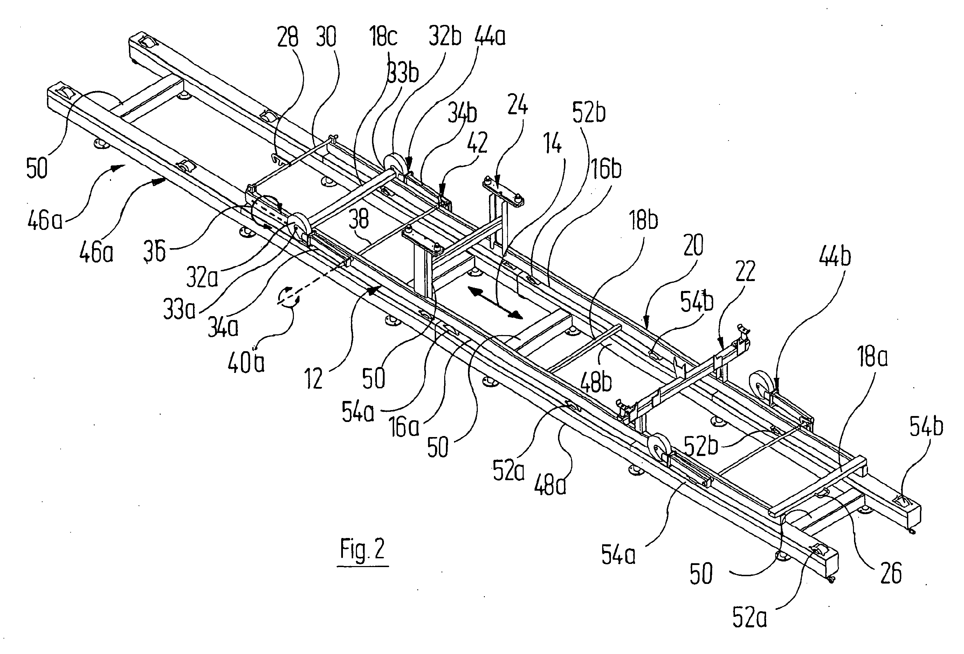

Einer der Skids 12 ist in größerem Maßstab in Figur 2 dargestellt. Der Skid 12 umfaßt zwei parallel zu einer mit einem Doppelpfeil 14 angedeuteten Längsrichtung des Skids 12 verlaufende Auflagekufen 16a, 16b. Diese sind als Hohlprofil-Längsholme mit rechteckigem Querschnitt ausgebildet. Die Funktion der Auflagekufen 16a, 16b wird nachstehend noch näher erläutert.

Die Auflagekufen 16a, 16b sind mittels dreier ebenfalls als Hohlprofil ausgebildeter Quertraversen 18a, 18b, 18c miteinander verbunden, wodurch insgesamt eine ausreichend verwindungssteife Rahmenstruktur geschaffen ist, die eine Tragebene des Skids 12 vorgibt. Diese Rahmenstruktur trägt auf ihrer Oberseite zwei Montageaufbauten 22, 24, an welchen eine zu fördernde Fahrzeugkarosserie lösbar befestigt werden kann. Die Montageaufbauten 22, 24 können abhängig von der zu fördernden Fahrzeugkarosserie baulich unterschiedlich ausfallen und entsprechend angepaßt sein, weshalb hier nicht weiter auf die Montageaufbauten 22, 24 eingegangen werden soll.

An einer Stirnseite des Skids 12 ist als ein Teil einer Kupplungseinrichtung eine Kupplungsöse 26 vorgesehen, welche beim vorliegenden Ausführungsbeispiel von der Quertraverse 18a getragen ist, die mit den entsprechenden Stirnseiten der Auflagekufen 16a, 16b fluchtet. Am gegenüberliegenden Ende des Skids 12 ist als anderer Teil der Kupplungseinrichtung ein zur Kupplungsöse 26 passender Kupplungshaken 28 vorgesehen. Dieser sitzt an einer senkrecht zwischen den Auflagekufen 16a, 16b verlaufenden Stange 30, welche drehbar gelagert ist. Zwei Skids 12 können somit dadurch miteinander verbunden werden, daß der Kupplungshaken 28 des ersten Skids 12 in die Kupplungsöse 26 des zweiten Skids 12 eingreift. Darauf wird nachstehend nochmals eingegangen.

Dem Ende mit dem Kupplungshaken 28 benachbart trägt jede Auflagekufe 16a, 16b des Skids 12 jeweils außen ein schwenkbares Laufrad 32a bzw. 32b, welches um eine Radachse 33a, 33b drehbar ist und ein Laufmittel des Skids 12 darstellt. Jedes Laufrad 32a, 32b ist an einem Ende eines Schwenkholms 34a bzw. 34b so gelagert, daß die Radachse 33a, 33b des Laufrads 32a, 32b um die Längsachse des Schwenkholms 34a, 34b verdrehbar ist. Dies ist beim Laufrad 32a durch einen Doppelpfeil 36 angedeutet. Die Längsachse des Schwenkholms 34a, 34b steht dabei senkrecht auf der Radachse 33a, 33b des zugehörigen Laufrads 32a bzw. 32b. Die Laufräder 32a, 32b können aus Stahl oder Kunststoff gefertigt sein. Sie weisen einen Durchmesser von beispielsweise 200 mm auf.

Die Schwenkholme 34a, 34b sind an ihrem dem jeweiligen Laufrad 32a bzw. 32b gegenüberliegenden Ende über eine Achsstange 38 starr miteinander verbunden. Die Achsstange 38 verläuft zwischen den Auflagekufen 16a, 16b des Skids 12 senkrecht dazu und durch diese hindurch, wobei sie in den Auflagekufen 16a, 16b mittels nicht eigens mit einem Bezugszeichen versehener Lager drehbar gelagert ist. Auf diese Weise können die Laufräder 32a, 32b zwischen einer in Figur 2 gezeigten Ruhestellung und einer Betriebsstellung, auf die später noch eingegangen wird, verschwenkt werden, was in Figur 2 anhand eines Doppelpfeiles 40 angedeutet ist.

Um die Laufräder 32a, 32b in ihrer Ruhestellung bzw. ihrer Betriebsstellung zu arretieren, ist eine Rasteinrichtung 42 vorgesehen, welche noch nachstehend erläutert wird.

Die Laufräder 32a, 32b, die Schwenkholme 34a, 34b, die Achsstange 38 und die Rasteinrichtung 42 bilden gemeinsam ein Fahrwerk 44a. Ein weiteres, dem Fahrwerk 44a baulich entsprechendes Fahrwerk 44b ist am gegenüberliegenden Ende des Skids 12 vorgesehen, wie es in Figur 2 gezeigt ist.

In Figur 2 ist der Skid 12 auf einem Abschnitt 46a eines Rollenbahnförderers 46 gezeigt. Dieser umfaßt in an und für sich bekannter Weise zwei parallel zueinander verlaufende Hohlprofil-Rollenleisten 48a, 48b, die über Hohlprofil-Quertraversen miteinander verbunden sind. In die Rollenleisten 48a, 48b sind in Längsrichtung, die in Figur 2 der Längsrichtung 14 des Skids 12 entspricht, abwechselnd nicht angetriebene Transportrollen 52a bzw. 52b und angetriebene Transportrollen 54a bzw. 54b eingesetzt. Dabei sind immer nicht angetriebene Transportrollen 52a, 52b angetriebenen Transportrollen 54b bzw. 54a einander gegenüberliegend angeordnet.

Jeder der angetriebenen Transportrollen 54a, 54b ist ein eigener elektrischer Nabenantrieb zugeordnet, der mit den Transportrollen 54a, 54b eine kompakte Baugruppe bildet. Die Nabenantriebe sind über eine gemeinsame Spannungsversorgung miteinander verbunden, jedoch über einen Steuerbus individuell ansteuerbar.

Bei der in Figur 1 gezeigten Förderanlage 10 sind zwei solche Abschnitte 46a eines Rollenbahnförderers 46, wie einer in Figur 2 gezeigt ist, lediglich durch gestrichtelte Linien angedeutet.

Neben dem Rollenbahnförderer 46 umfaßt die in Figur 1 gezeigte Förderanlage 10 einen Pufferbereich 56. In einem solchen Pufferbereich werden beladene oder unbeladene Skids 12 in einer Warteschleife geparkt, bevor sie einer weiteren Behandlungsstation zugeführt werden. So kann eine gleichmäßige Durchsatzrate bei mehreren von der Förderanlage 10 bedienten Behandlungsstationen aufrecht erhalten werden.

Der beim vorliegenden Ausführungsbeispiel gezeigte Pufferbereich 56 umfaßt zwei geradlinige Pufferstränge 58a, 58b, deren Streckenführung durch jeweils eine Bodenschiene 60a, 60b vorgegeben ist. Die Bodenschienen 60a, 60b ihrerseits umfassen jeweils zwei parallel verlaufende Schienenstränge 62. Die Schienenstränge 62 können aus Stahl, insbesondere aus einem L-Stahl, oder aus einem Kunststoff, wie Polyvinylchlorid, gefertigt sein.

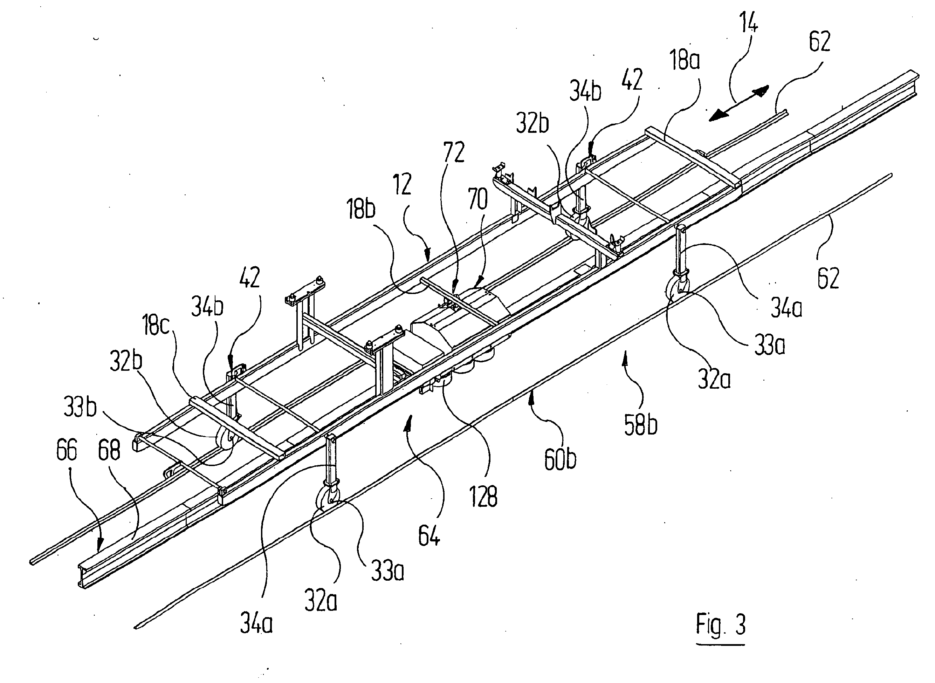

Figur 3 zeigt einen Abschnitt des Pufferstrangs 58b mit einem darin angeordneten Skid 12 in vergrößerter Darstellung. Wie dort zu erkennen ist, läuft der Skid 12 im Pufferbereich 56 auf seinen ausgeschwenkten, ihre Betriebsstellung einnehmenden Laufrädern 32a, 32b. In der Betriebsstellung jedes Laufrades 32a, 32b ist der jeweils zugehörige Schwenkholm 34a, 34b mittels der Rasteinrichtung 42 in einer Stellung arretiert, in welcher er im wesentlichen senkrecht zur oben erwähnten Tragebene des Skids 12 nach unten verläuft. Somit ist die Radachse 33a, 33b jedes Laufrads 32a, 32b in deren Betriebsstellung um eine Achse verdrehbar, die senkrecht auf der Tragebene steht.

Der Abstand der Schienenstränge 62 der Bodenschiene 60b ist so gewählt, daß sie die um die Längsachse des jeweiligen Schwenkholms 34a, 34b verdrehbaren Laufräder 32a, 32b (vgl. Figur 3) jeweils außen flankieren, so daß im Bereich der Bodenschiene 60b eine Verdrehung der Laufräder 32a, 32b verhindert ist und das Skid bei einer Bewegung in seiner Längsrichtung 14 durch die Bodenschiene 60b geführt ist.

Innerhalb des Pufferbereichs 56 wird der Skid 12 mittels eines Antriebssystems 64 angetrieben, welches von dem Prinzip der angetriebenen Transportrollen 54a, 54b des in Figur 2 gezeigten Rollenbahnförderers 46 abweicht und welches in Figur 1 in der Übersicht zu erkennen ist.

Dazu verläuft mittig zwischen den Schienensträngen 62 der Bodenschiene 60b und parallel dazu eine einspurige Führungsschiene 66, welche als Doppel-T-Profil ausgebildet ist. Die Führungsschiene 66 kann beispielsweise aus einer Aluminiumlegierung, wie AlMgSi 05 F 25, oder aus einem Kunststoff gefertigt sein.

Die Führungsschiene 66 des Anstriebssystems 64 kann, wie es unter anderem in den Figuren 1 und 3 gezeigt ist, aus einzelnen Schienensegmenten 68 zusammengesetzt sein.

Auf der Führungsschiene 66 ist sind mehrere Antriebseinheiten 70 angeordnet, welche in beiden Richtungen entlang der Führungsschiene 66 individuell verfahrbar sind. Jede Antriebseinheit 70 umfaßt eine Koppeleinrichtung 72, welche mit der mittleren Quertraverse 18b des Skids 12 zusammenarbeitet und mit dieser koppeln kann (vgl. Figur 3). Wenn die Antriebseinheit 70 mit der Quertraverse 18b des Skids 12 gekoppelt ist, folgt der Skid 12 der Bewegung der Antriebseinheit 70 entlang der Führungsschiene 66 in eine Förderrichtung, die einer Richtung des Doppelpfeils 14 entspricht. Auf die Antriebseinheit 70 sowie deren Koppeleinrichtung 72 wird weiter unten nochmals ausführlicher eingegangen.

Wiederum in Figur 1 ist zu erkennen, daß bei der Förderanlage 10 zwischen jedem Pufferstrang 58a, 58b des Pufferbereichs 56 und jeweils einem Abschnitt 46a des Rollenbahnförderers 46 eine Übergabestation 74a bzw. 74b vorgesehen ist. Diese dienen dazu, bei einem Skid 12, welcher sich auf seinen Laufrädern 32a, 32b innerhalb des Pufferbereichs 56 bewegt, die Fahrwerke 44a, 44b aus ihrer Betriebsstellung in ihre Ruhestellung zu verschwenken, damit der Skid 12 auf seinen Auflagekufen 16a, 16b auf dem Rollenbahnförderer 46 gefördert werden kann. Soll ein Skid 12 vom Rollenbahnförderer 46 in einen Pufferbereich 56 überführt werden, dient die Übergabestation 74 dazu, die Fahrwerke 44a, 44b aus ihrer Ruhestellung in ihre Betriebsstellung zu verschwenken.

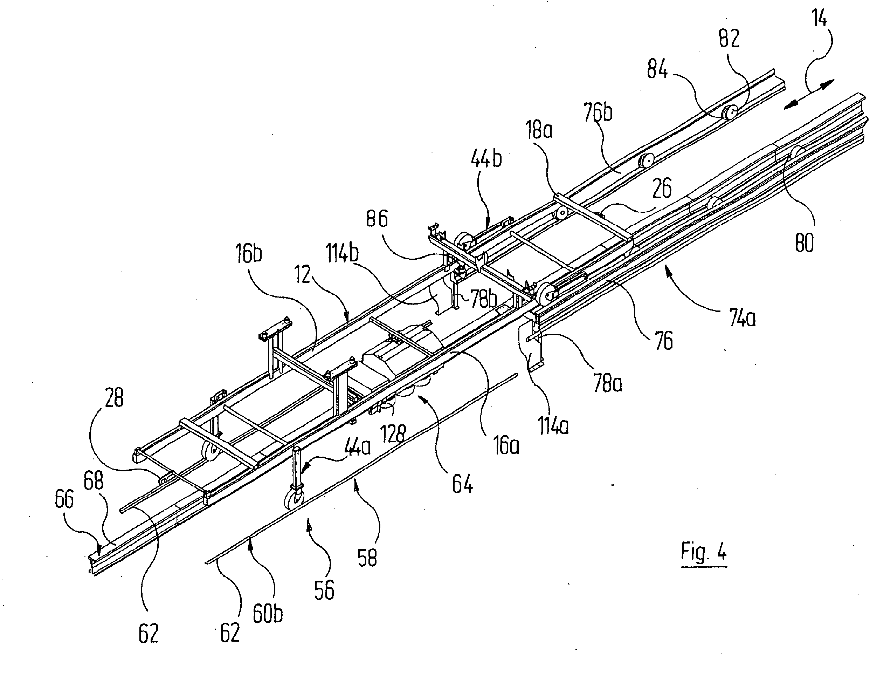

Ein dem Pufferstrang 58a des Pufferbereichs 56 zugewandter Endbereich der Übergabestation 74a ist in Figur 4 zu erkennen. Dort ist außerdem ein Skid 12 gezeigt, welcher sich mit seinem Endabschnitt, der das Fahrwerk 44b in seiner Ruhestellung trägt, in der Übergabestation 74a und sich mit dem übrigen Abschnitt, der das Fahrwerk 44a in seiner Betriebsstellung trägt, im Pufferbereich 56 bzw. in dessen Pufferstrang 58a befindet.

Wie in Figur 4 zu erkennen ist, umfaßt die Übergabestation 74a zwei in Förderrichtung 14, die erneut durch einen Doppelpfeil angedeutet ist, parallel zueinander verlaufende Rollenholme 76a, 76b. An ihren gegenüberliegenden Enden weisen die Rollenholme 76a, 76b jeweils Füße 78a bzw. 78b auf, welche am Boden verankert sind.

Der Rollenholm 76a weist auf seiner dem gegenüberliegenden Rollenholm 76b zugewandten Innenseite mehrere gleichmäßig voneinander beabstandete und in Längsrichtung 14 verlaufende Rollen 80 auf, auf denen der Skid 12 mit seiner Auflagekufe 16a ablaufen kann. Der Rollenholm 76b weist seinerseits auf der dem Rollenholm 76a zugewandten Innenseite mehrere Führungsrollen 82 auf, die den Rollen 80 des Rollenholms 76a gegenüberliegend angeordnet sind und eine Nut 84 aufweisen, deren Breite so bemessen ist, daß die Auflagekufe 16b des Skids 12 darin laufen kann. Auf diese Weise ist der Skid 12 seitlich geführt, wenn es mit seinen Auflagekufen 16a, 16b auf den Rollen 80, 82 der Übergabestation 74a aufliegt.

Entlang des Rollenholms 76a ist jede zweite Rolle 80 und entlang des Rollenholm 76b ist jede zweite Rolle 82 angetrieben, wobei immer eine angetriebene Rolle 80 einer nicht angetriebenen Rolle 82 und eine nichtangetriebene Rolle 80 einer angetriebenen Rolle 82 gegenüberliegt.

Jeder der angetriebenen Rollen 80 bzw. 82 ist ein eigener elektrischer Nabenantrieb zugeordnet, der mit der jeweiligen Rolle 80 bzw. 82 eine kompakte Bauruppe bildet. Die Nabenantriebe sind wie bei dem Rollenbahnförderer 46 über eine gemeinsame Spannungsversorgung verbunden, jedoch über einen Steuerbus individuell ansteuerbar.

Die bis hierher erläuterte Übergabestation 74a und auch die Übergabestation 74b entsprechen weitgehend einem an und für sich bekannten Rollenbahnförderer, der aber von einer Antriebseinheit unterfahrbar ist.

Die Höhe der Übergabestation 74a ist so bemessen, daß die Auflagefläche der Rollen 80 und 82 mit der Auflagefläche der Transportrollen 52a, 52b und 54a, 54b des Rollenbahnförderers 46 in einer gemeinsamen Transportebene liegen. Diese kann z.B. 500 mm oberhalb eines Gebäude(zwischen)bodens verlaufen.

Die Schwenkholme 34a, 34b jedes Fahrwerks 44a, 44b des Skids 12 und die zugehörigen Laufräder 32a, 32b sind in ihren Abmessungen so aufeinander abgestimmt, daß die Unterseite der Auflagekufen 16a, 16b des Skids 12 etwa auf Höhe dieser Transportebene liegt, wenn die Laufräder 32a, 32b ihre Betriebsstellung einnehmen und auf dem Gebäude(zwischen)boden aufliegen. An den Enden jeder Auflagekufe 16a, 16b verläuft deren Unterseite zum Ende hin nach oben geneigt. Dieser jeweilige geneigte Abschnitt der Auflagekufen 16a, 16b stellt sicher, daß es beim Auffahren des Skids 12 auf die Übergabestation 74a oder den Rollenbahnförderer 46 nicht zu einem Blockieren des Skids 12 an den zugehörigen Rollen 80, 82 bzw. 52, 54 kommen kann.

Damit der Skid 12 beim Einfahren in die Übergabestation 74a zuverlässig mit seiner Auflagekufe 16a in die Nut 84 der Führungsrollen 82 einfädelt, ist an beiden Enden des Rollenholms 76b eine Positionierhilfe in Form einer parallel zur Transportebene angeordneten Rolle 86 vorgesehen, welche um eine senkrecht auf der Transportebene stehende Achse verdrehbar ist. Wie in Figur 4 zu erkennen ist, ist die Rolle 86 so angeordnet, daß sie innen an der Auflagekufe 16b des Skids 12 entlangläuft, wenn dieses in die Übergabestation 74a einfährt. Es kann eine weitere Rolle vorgesehen sein, die außen an der Auflagekufe 16b des Skids 12 entlangläuft, wodurch die Auflagekufe 16b somit zwischen zwei Rollen 86 in ihrer Spur gehalten wird.

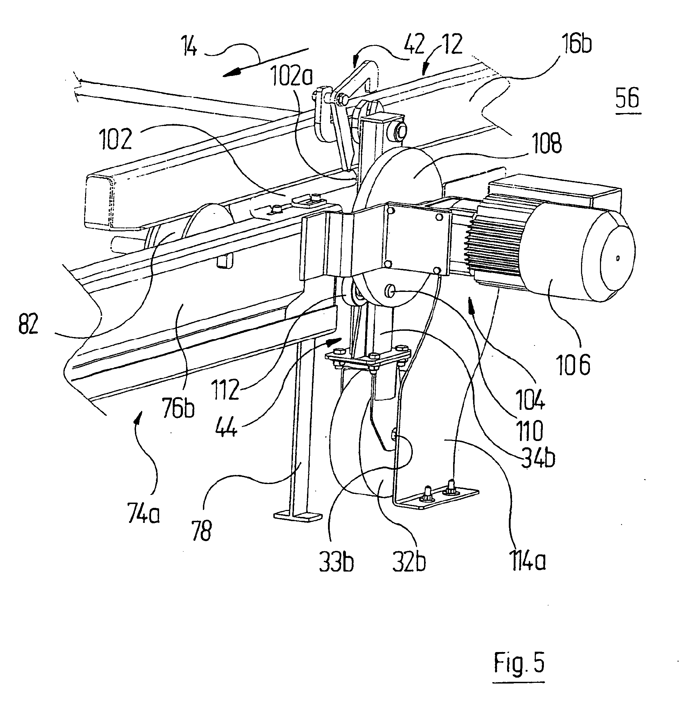

Wie außerdem anhand Figur 4 ersichtlich ist, müssen die Fahrwerke 44a, 44b des Skids 12 aus ihrer Betriebsstellung in ihre Ruhestellung verschwenkt werden, wenn der Skid 12 aus dem Pufferbereich 56 kommend in die Übergabestation 74a einfährt. Dies wird nachstehend anhand der Figuren 5 bis 8 erläutert.

Wie in Figur 5 zu erkennen ist, fährt der Skid 12 zunächst so weit in die Übergabestation 74a ein, bis die Schwenkholme 34a, 34b des entsprechenden Fahrwerks 44 kurz vor den Rollenholmen 76 der Übergabestation 74a stehen. In dieser Position ruht der Skid 12 bereits mit dem entsprechenden Endabschnitt seiner Auflagekufen 16a, 16b, wovon in Figur 5 lediglich die Auflagekufe 16b zu erkennen ist, auf jeweils einer Rolle 80 bzw. einer Führungsrolle 82 der Übergabestation 74a.

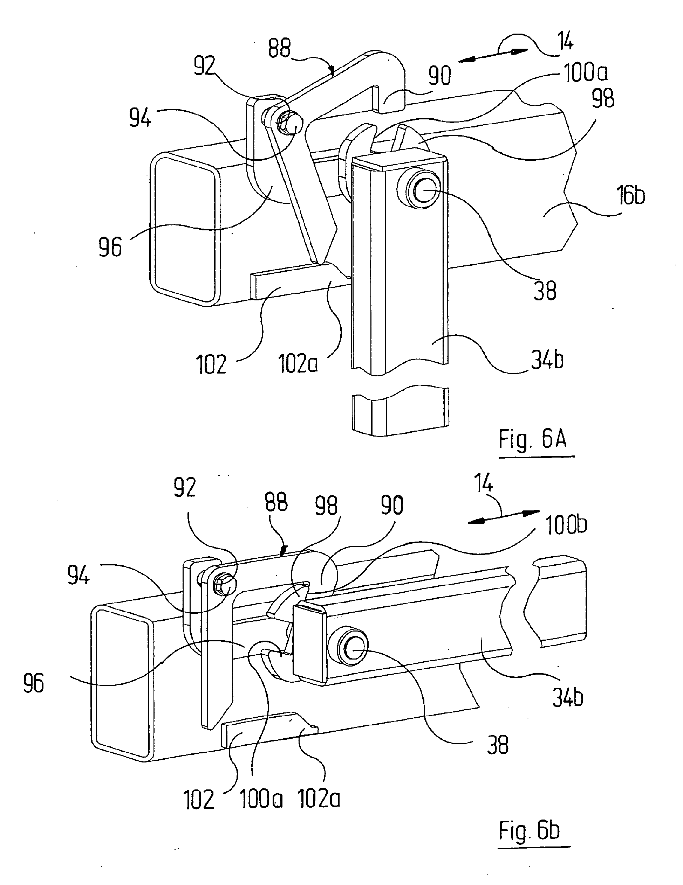

Wie oben angesprochen, ist das Fahrwerk 44 mittels der Rasteinrichtung 42 in seiner Betriebsstellung verrastet. Wie in den Figuren 6A und 6B gut zu erkennen ist, umfaßt die Rasteinrichtung 42 beim vorliegenden Ausführungsbeispiel einen L-förmigen Rasthaken 88, dessen eines Ende nach innen angeschrägt ist und an dessen anderem Ende ein in Richtung auf den anderen L-Schenkel gebogener kurzer Halteschenkel 90 vorgesehen ist, der mit dem ihn tragenden L-Schenkel einen Winkel von etwa 70° einschließt. Der Rasthaken 88 weist am Scheitelpunkt des L eine Durchgangsbohrung 92 auf, über welche er verschwenkbar auf eine Achse 94 aufgeschoben ist. Diese Achse 94 verläuft senkrecht zur Längsrichtung 14 des Skids 12 und parallel zur Tragebene des Skids 12 und ist ihrerseits von einer Haltestrebe 96 gehalten, welche an der Außenseite der Auflagekufe 16b des Skids 12 angebracht ist.

Als Gegenstück zum Rasthaken 88 ist eine Rastscheibe 98 starr mit dem Schwenkholm 34b des Fahrwerks 44 verbunden. Die Rastscheibe 98 ist senkrecht zur Tragebene des Skids 12 und parallel zu dessen Längsrichtung 14 angeordnet. Sie weist am Umfang zwei um 90° versetzte Ausnehmungen 100a, 100b auf und ist so angeordnet, daß der Halteschenkel 90 des Rasthakens 88 in die Ausnehmung 100a der Rastscheibe 98 eingreifen kann, wenn das Fahrwerk 44 seine Betriebsstellung einnimmt, was in Figur 6A zu erkennen ist. Nimmt das Fahrwerk 44 seine Ruhestellung ein, so kann der Halteschenkel 90 des Rasthakens 88 in die Ausnehmung 100b der Rastscheibe 98 eingreifen; dies ist in Figur 6B gezeigt.

Wenn der Rasthaken 88 in der Betriebsstellung des Fahrwerks 44 in die Rastscheibe 98 verrastet ist, nimmt er dieselbe Stellung ein, wie wenn er in der Ruhestellung des Fahrwerks 44 in die Ausnehmung 100b der Rastscheibe 98 eingerastet ist.

Um nun den Rasthaken 88 aus der Ausnehmung 100a der Rastscheibe 98 zu lösen und dadurch ein Verschwenken des Fahrwerks 44 zu ermöglichen, wenn der Skid 12 aus dem Pufferbereich 56 in die Übergabestation 74a einfährt, ist am Ende des Rollenholms 76b der Übergabestation 74a eine diesem gegenüber in Längsrichtung 14 überstehende Auffahrschiene 102 vorgesehen. Diese ist in einer Höhe angeordnet, bei der ihr freies Ende 102a gegen das abgeschrägte Ende des Rasthakens 88 stößt, wenn der Skid 12 in Richtung auf die Übergabestation 74a bewegt wird.

Das freie Ende 102a der Auffahrschiene 102 ist nach oben und in Richtung auf die Übergabestation 74a angeschrägt (vgl. Figur 6A). Beim Auffahren des Skids 12 auf die Übergabestation 74a stößt zunächst das Ende 102a der Auffahrschiene 102 an das entsprechende Ende des Rasthakens 88 und verdreht diesen beim weiteren Bewegen des Skids in Richtung des Pfeiles 14 (vgl. Figur 5) um seine Schwenkachse 94. Dabei wird der Halteschenkel 90 aus der Ausnehmung 100a der Rastscheibe 98 herausgeführt, wodurch das Fahrwerk 44 nicht mehr arretiert ist.

Um nun das nicht mehr arretierte Fahrwerk 44 aus seiner in Figur 5 gezeigten Betriebsstellung in seine Ruhestellung zu überführen, ist in Richtung auf die Übergabestation 74a gesehen vor derselben eine Verschwenkeinrichtung 104 vorgesehen. Diese umfaßt einen steuerbaren Elektromotor 106, welcher eine Rotationsscheibe 108 antreibt, deren Drehachse senkrecht zur Laufrichtung 14 des Skids 12 und parallel zu dessen Tragebene verläuft. Der Skid 12 kann beim Auffahren auf die Übergabestation 74a innen an der Rotationsscheibe 108 vorbeifahren. Letztere trägt exzentrisch über eine Verbindungsachse 110 eine Auffahrrolle 112, wobei die Verbindungsachse 110 parallel zur Drehachse der Rotationsscheibe 108 verläuft. Die Auffahrrolle 112 ist dabei bezogen auf die Übergabestation 74 so weit nach innen versetzt angeordnet, daß der Schwenkholm 34b des entsprechenden Fahrwerks 44 gegen sie stößt, wenn der Skid 12 weit genug in die Übergabestation 74a eingefahren ist.

Beim in Figur 5 veranschaulichten Einfahren des Skids 12 in die Übergabestation 74a ist die Rotationsscheibe 108 der Verschwenkeinrichtung 104 zunächst so eingestellt, daß die Auffahrrolle 112 eine Ausgangsstellung einnimmt, in welcher sie unterhalb des Endes 102a der Auffahrschiene 102 der Übergabestation 74a und unterhalb einer zur Transportebene parallelen Ebene angeordnet ist, die durch den Mittelpunkt der Rotationsscheibe 108 verläuft.

Somit ist gewährleistet, daß beim Einfahren des Skids 12 in die Übergabestation 74a zunächst wie oben beschrieben die Rasteinrichtung 42 entriegelt wird, bevor der Schwenkholm 34b gegen die Auffahrrolle 112 stößt, da der Rasthaken 88 bereits durch die Auffahrschiene 102 verschwenkt worden ist.

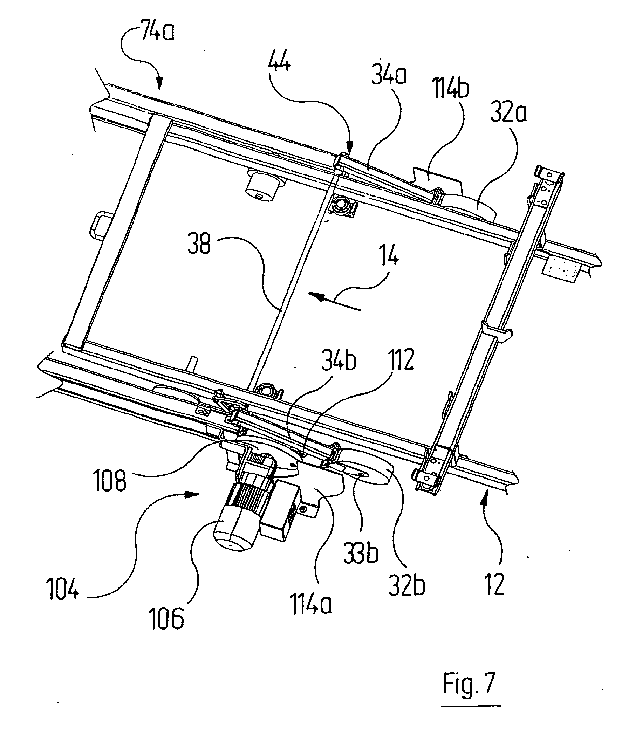

Beim weiteren Verfahren des Skids 12 in die Richtung des Pfeiles 14 wird der Schwenkholm 34b des Fahrwerks 44 um die Achsstange 38 verschwenkt, wobei er durch die Auffahrrolle 112 der Verschwenkeinrichtung 104 in seiner Schwenkbewegung geführt ist. Während der weiteren Verfahrbewegung des Skids 12 in der Richtung des Pfeiles 14 wird darauf abgestimmt die Rotationsscheibe 108 von der Außenseite betrachtet entgegen dem Uhrzeigersinn verdreht, wodurch der Schwenkholm 34b so weit geführt nach oben verschwenkt wird, bis die Radeinrichtung 44 ihre Ruhestellung erreicht. Da die beiden Schwenkholme 34a und 34b des Fahrwerks 44 über die Achsstange 38 starr miteinander verbunden sind, folgt der gegenüberliegende Schwenkholm 34a mit dem Laufrad 32a der Schwenkbewegung des Schwenkholms 34b. Dies ist anhand einer Zwischenstellung in Figur 7 gezeigt.

Die Bewegung des Skids 12 in die Richtung des Pfeiles 14, die Verdrehung der Rotationsscheibe 108 der Verschwenkeinrichtung 104 und die Länge der Auffahrschiene 102 der Übergabestation 74 sind so aufeinander abgestimmt, daß das abgeschrägte Ende des Rasthakens 88 den Bereich der Auffahrschiene 102 verläßt, nachdem das Fahrwerk 44 seine Ruhestellung eingenommen hat. Dadurch fällt der Rasthaken 88 in seine in Figur 6B gezeigte Raststellung, in welcher sein Halteschenkel 90 in die Ausnehmung 100b der Rastscheibe 98 eingreift, wodurch das Fahrwerk 44 in seiner Ruhestelle arretiert ist.

Der gleiche Vorgang läuft ab, wenn das zweite der beiden Fahrwerke 44a, 44b zur Übergabestation 74a gelangt. Dazu muß jedoch vorher die Rotationsscheibe 108 wieder so verdreht werden, daß die Auffahrrolle 112 ihre oben geschilderte Ausgangsstellung einnimmt.

Beim Einfahren des Skids 12 in die Übergabestation 74 werden deren angetriebene Rollen 80 bzw. 82 so angesteuert, daß sie den Skid 12 mit derselben Geschwindigkeit fördern wie die Antriebseinheit 70.

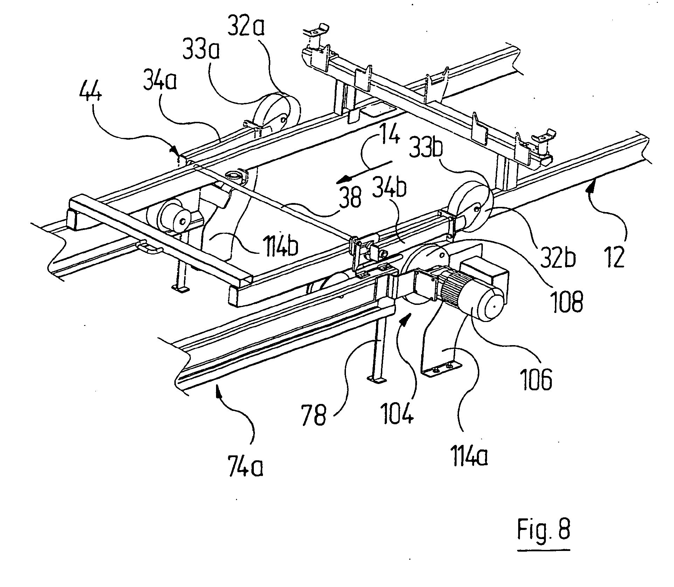

Wie in Figur 8 zu erkennen ist, ist die Achse 33a, 33b jedes Laufrads 32a, 32b in der Ruhestellung des Fahrwerks 44 oberhalb der Auflagekufen 16a, 16b des Skids 12 angeordnet. Damit die um die Längsachse der zugehörigen Schwenkholme 34a, 34b verdrehbaren Laufrollen 32a, 32b beim Verschwenken aus der Betriebsstellung in die Ruhestellung sich nicht beispielsweise aufgrund der Schwerkraft verdrehen und somit beim Verschwenken gegen die Auflagekufen 16a, 16b des Skids 12 anstoßen können, ist entlang des Bewegungsweges der Laufräder 32a, 32b ein Führungsblech 114a bzw. 114b vorgesehen, welche das entsprechende Fahrwerk 44 zwischen sich aufnehmen und die Radachse 33a, 33b jedes Laufrads 32a, 32b beim Verschwenken im wesentlichen senkrecht zur Förderrichtung 14 und in einer zur Tragebene des Skids 12 parallelen Ebene halten.

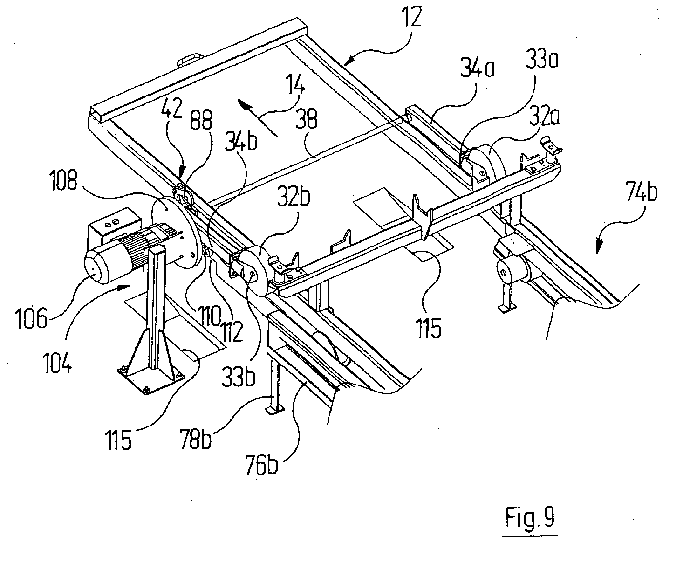

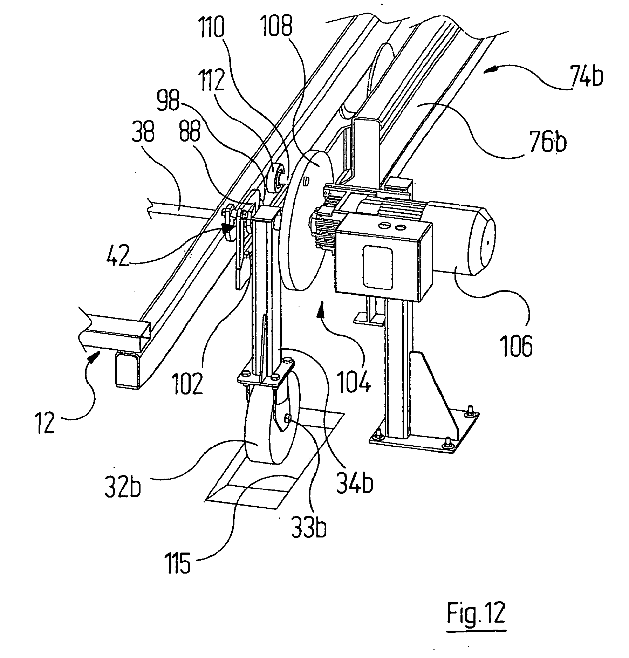

In den Figuren 5, 7 und 8 ist das Auffahrende einer Übergabestation 74a gezeigt, welcher der Skid 12 aus dem Pufferbereich 56 kommend zugeführt werden soll. Ein Abfahrende einer Übergabestation 74b, welcher der Skid 12 vom Rollenbahnförderer 46 kommend zugeführt werden soll, ist in den Figuren 9 bis 12 in unterschiedlichen Ansichten gezeigt. Dort weicht die Anordnung der einzelnen Komponenten zum Verschwenken der Fahrwerke 44 etwas von derjenigen am Auffahrende der Übergabestation 74a ab.

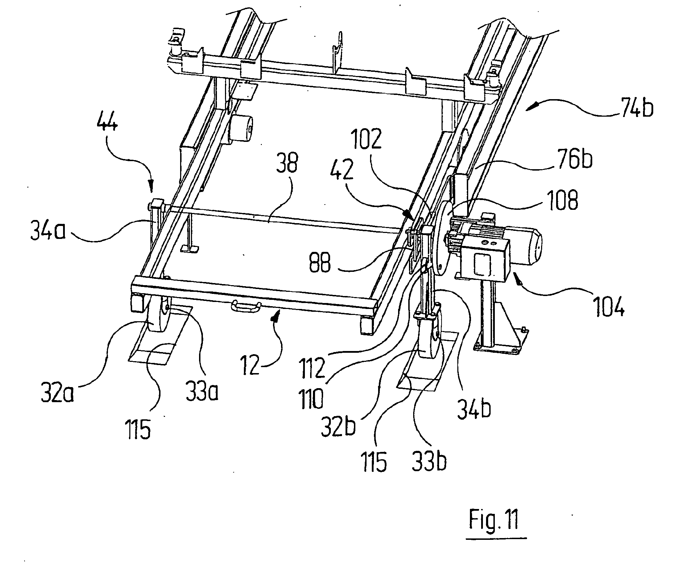

Die Auffahrschiene 102 ist beispielsweise in einem Abstand vom Rollenholm 76b der Übergabestation 74b angeordnet, was insbesondere in Figur 11 zu erkennen ist. Auch die Verschwenkeinrichtung 104 ist in einem größeren Abstand zum Rollenholm 76b der Übergabestation 74b angeordnet, als am Auffahrende der Übergabestation 74a. Diese Maßnahme ergibt sich daraus, daß zwischen der Auffahrschiene 102 und der Verschwenkeinrichtung 104 am Abfahrende der Übergabestation 74b genügend Raum vorhanden sein muß, damit die Fahrwerke 44 bzw. deren Schwenkholme 34a, 34b mit ihren Laufrädern 32a, 32b aus der Ruhestellung in die Betriebsstellung nach unten verschwenken können.

Der Ablauf des Verschwenkens der Fahrwerke 44 entspricht dabei im wesentlichen einer Umkehrung des Vorgangs, der beim Auffahren des Skids 12 in die Übergabestation 74a erfolgt.

Die Geschwindigkeit der angetriebenen Rollen 80, 82 der Übergabestation 74b und die Geschwindigkeit der den Skid 12 nach der Übergabestation 74b weiterfördernden Antriebseinheit 70 sind so aufeinander abgestimmt, daß ein auf die Fördergeschwindigkeit des Skids 12 bezogener im wesentlichen gleichförmiger Übergang des Skids 12 von der Übergabestation 74b zum Pufferbereich 56 erfolgt.

Die Rotationsscheibe 108 der Verschwenkeinrichtung 104 wird zunächst in eine Stellung gebracht, in welcher die Auffahrrolle 112 in etwa in Richtung auf die Übergabestation 74b neben dem Mittelpunkt der Rotationsscheibe 108 angeordnet ist, so daß der Schwenkholm 34b auf der Auffahrrolle 112 aufliegt, wenn er in den Bereich der Verschwenkeinrichtung 104 kommt. Der Rasthaken 88 wird durch Auffahren auf die Auffahrschiene 102 aus der Ausnehmung 100b der Rastscheibe 98 herausgeführt, wodurch das entsprechende Fahrwerk 44 nicht mehr in seiner Ruhestellung arretiert ist.

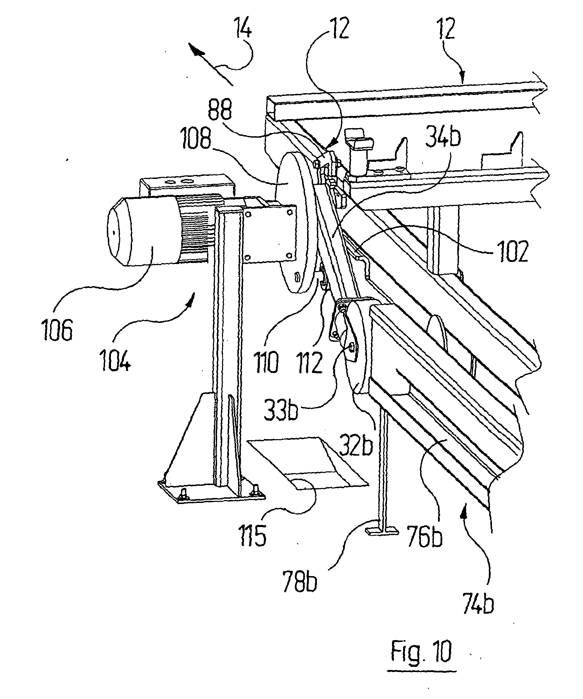

Beim weiteren Verfahren des Skids 12 in Richtung des Pfeiles 14 wird die Rotationsscheibe 108 von außen betrachtet im Uhrzeigersinn mittels des Elektromotors 106 verdreht, so daß der Schwenkholm 34b des Fahrwerks 44 aufgrund der Schwerkraft, jedoch durch die Auffahrrolle 102 der Verschwenkeinrichtung 104 geführt, nach unten verschwenkt (vgl. Figur 10), bis das Fahrwerk 44 seine Betriebsstellung einnimmt (vgl. Figur 11). Der Boden weist Vertiefungen 115 auf, so daß das Fahrwerk 44 ohne Behinderung in seine Betriebsstellung verschwenken kann.

Die Länge der Auffahrschiene 102 in Richtung des Pfeiles 14 ist so bemessen, daß dann, wenn das Fahrwerk 44 seine Betriebsstellung einnimmt, der Rasthaken 88 freigegeben wird und mit seinem Halteschenkel 90 in die Ausnehmung 100a der Rastscheibe 98 eingreift. Dadurch ist das Fahrwerk 44 in seiner Betriebsstellung arretiert.

Aus dem oben Gesagten geht hervor, daß die Übergabestationen 74a und 74b mit einem Auffahrende bzw. einem davon abweichend ausgebildeten Abfahrende gemäß dem beschriebenen Ausführungsbeispiel nur für jeweils eine Durchfahrtsrichtung des Skids 12 konzipiert sind.

Bei einer hier nicht gezeigten Abwandlung ist es möglich, auf beiden Seiten der Übergabestation 74 in diese ein- bzw. aus dieser herauszufahren. Dazu kann beispielsweise der Skid 12 so ausgestaltet sein, daß seine Fahrwerke 44a, 44b nicht in die gleiche Richtung verschwenken können, sondern in entgegengesetzte Richtungen. Zum Beispiel könnten die Laufräder 32a, 32b jedes Fahrwerks 44a, 44b in deren Ruhestellung jeweils zum zugehörigen Ende des Skids 12 weisen. Die beiden Fahrwerke 44a, 44b wären in dieser Weise spiegelsymmetrisch zu einer Spiegelebene angeordnet, die senkrecht zur Förderrichtung 14 und senkrecht zur Tragebene des Skids 12 verläuft. Dann könnten die Komponenten der Verschwenkeinrichtung 104 der Übergabestation 74 an deren beiden Enden wie im Zusammenhang mit den Fig 5, 7 und 8 beschrieben angeordnet sein.

Wenn ein Skid 12 verwendet wird, bei welchem die Fahrwerke 44a, 44b in die gleiche Richtung verschwenken, wie es in den Figuren gezeigt ist, kann eine weitere hier nicht gezeigte Abwandlung einer Übergabestation 74 eingesetzt werden. Bei dieser ist an den gegenüberliegenden Enden der Übergabestation 74 jeweils keine Verschwenkeinrichtung 104 vorgesehen, sondern sind von der Transportebene der Übergabestation nach unten geneigte und vom entsprechenden Ende weg parallel verlaufende Ablaufbleche angeordnet, deren jeweilige Laufflächen in einer gemeinsamen Ebene liegen.

Auf diesen Ablaufblechen laufen die Laufräder 32a, 32b beim Ein- oder Ausfahren des Skids 12 in die Übergabestation 74, wobei zu diesem Zeitpunkt die Rasteinrichtung 42 mit Hilfe der Auffahrschiene 102 entriegelt wurde, wie es oben beschrieben ist. Beim Einfahren in eine Übergabestation fahren die Laufräder 32a, 32b somit auf in Fahrtrichtung nach oben geneigten Ablaufblechen, wodurch das zugehörige Fahrwerk 44a, 44b durch die Ablaufbleche geführt aus seiner Betriebsstellung in seine Ruhestellung gezwungen wird. Beim Abfahren von einer entsprechend ausgebildeten Übergabestation 74 rollen die Laufräder 32a, 32b auf den dann in Fahrtrichtung nach unten geneigten Ablaufblechen ab, wobei das Verschwenken des entsprechenden Fahrwerks 44a, 44b von der Ruhestellung in die Betriebsstellung aufgrund der Schwerkraft erfolgt. Die Orientierung des Skids 12 ist dabei so, daß die Fahrwerke 44a, 44b beim Durchfahren des Skids 12 durch die Übergabestation 74 in die der Durchfahrtrichtung entgegengesetzte Richtung verschwenken.

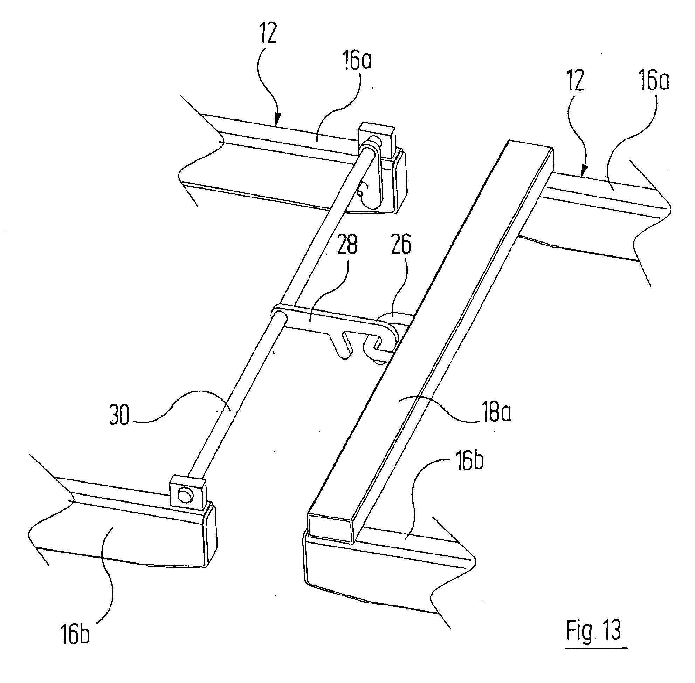

In Figur 13 sind in größerer perspektivischer Ansicht die Enden zweier miteinander verbundenen Skids 12 gezeigt. Dabei greift der Kupplungshaken 28 des einen Skids 12 in die Kupplungsöse 26 des anderen Skids 12 ein. Auf diese Weise können zwei odere mehrere Skids 12 miteinander verbunden und im Verband insbesondere durch eine einzige Antriebseinheit 70 gefördert werden.

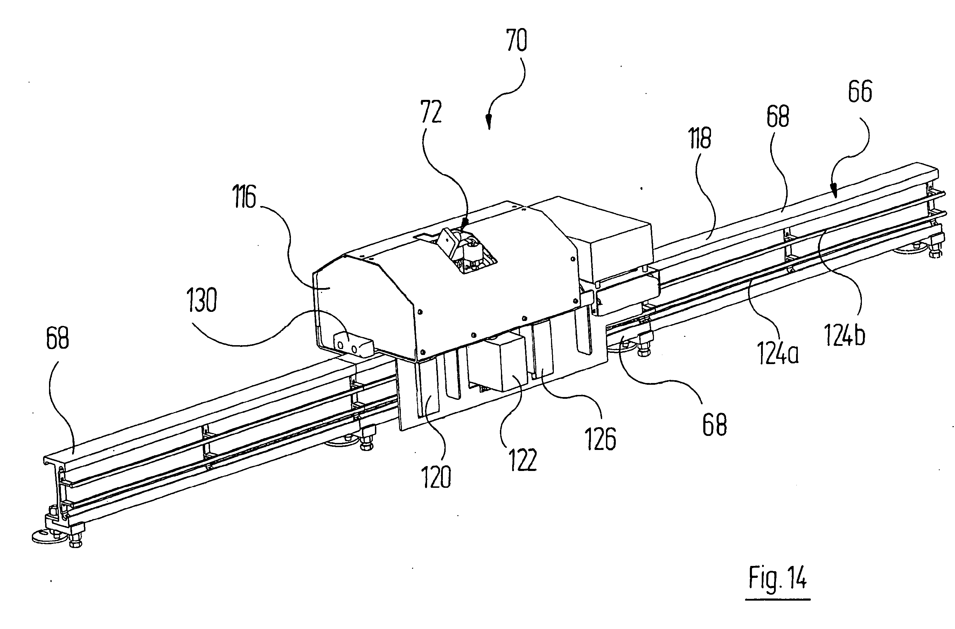

Das in den Figuren 1, 3 und 4 gezeigte Ausführungsbeispiel der Antriebseinheit 70 ist nochmals in Figur 14 zusammen mit drei Schienensegmenten 68 der Führungsschiene 66 in größerem Maßstab dargestellt.

Die Antriebseinheit 70 läuft mit im Innern eines Gehäuses 116 angeordneten Laufrollen, welche hier nicht zu erkennen sind, auf der Oberseite 118 der Führungsschiene 66 ab.

Die Antriebseinheit 70 umfaßt eine Antenne 120 und eine Steuerung 122, um die Antriebseinheit 70 in an und für sich bekannter Weise mittels berührungsloser Datenübertragung, wie z.B. mittels Funk oder induktiver Kommunikation, zu steuern. Die Energiezufuhr der Antriebseinheit 70 erfolgt über mit Wechselstrom gespeiste Linienleiter 124a und 124b, die seitlich entlang der Führungsschiene 66 angebracht sind. Bei den Linienleitern 124a und 124b handelt es sich um eine zu einer langen Leiterschleife gestreckte Wicklung, welche mit dem Linienleiter 124a als Hinleitung und dem Linienleiter 124b als Rückleitung eine Schleife beschreibt. Die Energieübertragung erfolgt über eine Spule 126 an der Antriebseinheit 70, die in unmittelbarer Nähe der Linienleiter 124a, 124b angeordnet ist, ohne diese zu berühren.

Wie insbesondere in Figur 3 und Figur 4 zu erkennen ist, greift die Antriebseinheit 70 auf der der Antenne 120, der Steuerung 122 und der Spule 126 gegenüberliegenden Seite der Führungsschiene 66 in diese mittels dreier Preßrollen 128 ein, welche jeweils zusammen mit einem Nabenantrieb eine kompakte Baueinheit bilden und von denen in den Figuren jeweils nur eine mit dem Bezugszeichen 128 versehen ist. Die Preßrollen 128 verlaufen parallel zur Transportebene und sind jeweils um eine dazu senkrechte Achse drehbar.

Durch hier nicht zu erkennende seitliche Führungsrollen, die auf der gegenüberliegenden Seite unterhalb der Linienleiter 124a, 124b an der Schiene 66 anliegen, ist die Antriebseinheit 70 daran gehindert, seitlich auszubrechen oder zu verkippen.

Die Preßrollen 128 werden mittels der Steuerung 122 angesteuert, wobei sich die Antriebseinheit 70 aufgrund des Reibschlusses der Preßrollen 128 mit der Führungsschiene 66 entlang dieser bewegt.

Auf dieser Seite der Führungsschiene 66 ist beim vorliegenden Ausführungbeispiel außerdem ein Positionscode-Streifen angebracht, welcher mittels eines Auslesesensors auslesbare Barcodes umfaßt. Die Antriebseinheit 70 trägt einen entsprechend positionierten Auslesesensor. Auf diese Weise kann die Absolutposition jeder entsprechenden Antriebseinheit 70 innerhalb der Förderanlage 10 ermittelt werden, wodurch auch die Position eines von ihr bewegten Skids 12 erfaßt werden kann. Alternative Maßnahmen zur Positionserfassung der Antriebseinheit 70 und/oder des Skids 12, wie sie an und für sich bekannt sind, kommen ebenfalls in Betracht.

Auf der jeweiligen Stirnseite der Antriebseinheit 70 sind Pufferelemente 130 aus einem elastischen Material vorgesehen.

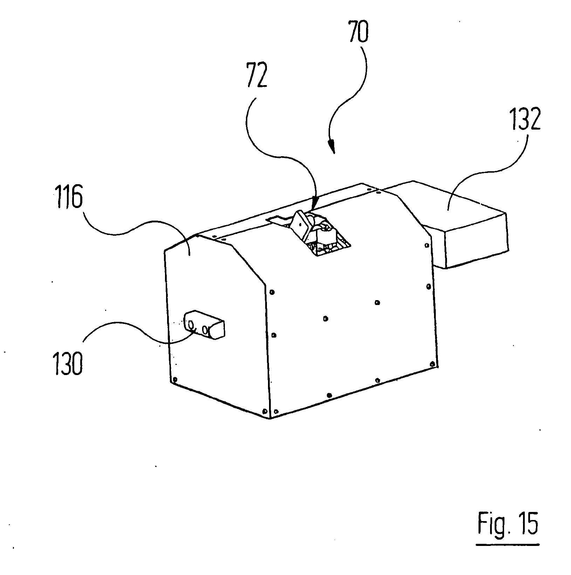

Wie oben erläutert, bilden mehrere separate Antriebseinheiten 70 zusammen mit der Führungsschiene 66 ein Antriebssystem 64. Bei einer Abwandlung dieses Antriebssystems 64 wird auf die Führungsschiene 66 verzichtet und die Antriebseinheit 70 fährt ohne Schienenführung auf dem Anlagenboden. Dies ist in Figur 15 angedeutet, wobei den Boden kontaktierende und mittels eines Nabenantriebs angetriebene steuerbare Laufrollen im Gehäuse 116 untergebracht und nicht zu erkennen sind. Die Antriebseinheit 70 umfaßt dann eine Steuerung 132, welche den Anforderungen an fahrerlose spurungebundene Antriebssysteme, wie sie an und für sich bekannt sind, entspricht.

Bei einem derart frei fahrenden System kann die Richtungsvorgabe z.B. mittels eines in den Boden eingelassenen Metalldrahts, der induktiv mit einer Spule abgetastet wird, erfolgen. Die Steuerung 132 der frei fahrenden Antriebseinheit 70 korrigiert dabei die Ist-Richtung hin zur Soll-Richtung der Antriebseinheit 70. Bei einer anderen Möglichkeit kann die Antriebseinheit 70 vollständig eigenständig navigieren, wozu eine entsprechende an und für sich bekannte Steuerungstechnik vorgesehen ist.

Wie oben erwähnt, wird eine Antriebseinheit 70 mit einem Skid 12 über eine Koppeleinrichtung 72 gekoppelt, so daß ein mit der Antriebseinheit 70 gekoppelter Skid 12 der Bewegung der Antriebseinheit 70, z.B. entlang der Führungsschiene 66, folgt.

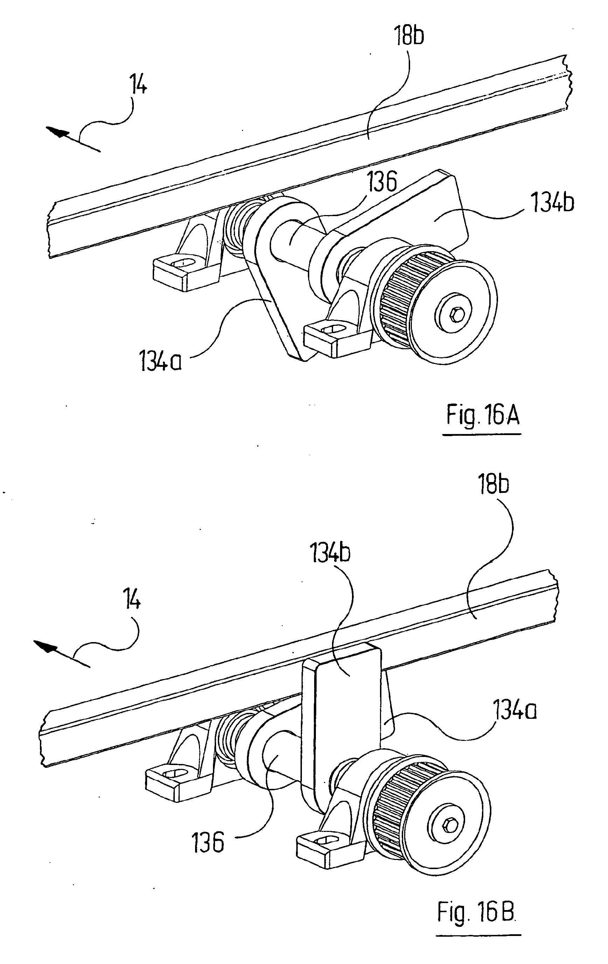

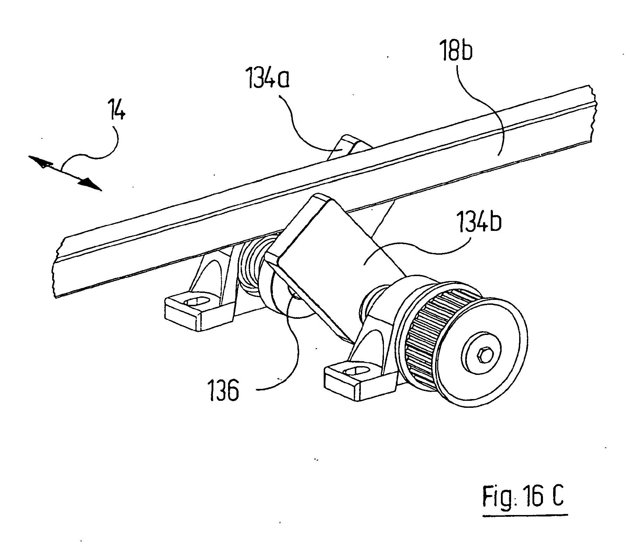

Ein Ausführungsbeispiel einer Koppeleinrichtung 72 ist in den Figuren 16A, 16B und 16C gezeigt. Die Koppeleinrichtung 72 der Antriebseinheit 70 umfaßt als Mitnehmer zwei im wesentlichen rechteckige ebene Paddel 134a, 134b, welche jeweils an einem Ende starr mit einer Achse 136 verbunden sind, die sich senkrecht zur ebenen Paddelfläche der Paddel 134a, 134b erstreckt. Die Paddel sind in einem Winkel von 80° zueinander auf der Achse 136 in einem derartigen Abstand voneinander angeordnet, daß zwischen die beiden Paddel 134a, 134b die mittlere Quertraverse 18b des Skids 12 aufgenommen werden kann. Diejenige Fläche jedes Paddels 134a, 134b, welche an der Quertraverse 18b des Skids 12 angreifen soll, stellt eine Mitnahmefläche dar.

Die Achse 136 der Koppeleinrichtung 72 ist mit einem steuerbaren Elektromotor verbunden, so daß die Paddel 134a, 134b gezielt um die Achse 136 herum verschwenkt und in einer gewünschten Stellung gehalten werden können.

Für den Betrieb der Antriebseinheit 70 sind insbesondere drei Stellungen der Paddel 134a, 134b wichtig, welche jeweils in den Figuren 16A, 16B und 16C dargestellt sind.

In einer ersten Stellung (vgl. Figur 16A) nehmen die Paddel 134a, 134b eine Position ein, bei welcher die Antriebseinheit 70 unter einem Skid 12 hindurchfahren kann, ohne daß ein Paddel 134a, 134b an der Quertraverse 18b des Skids 12 angreifen kann, welche etwas tiefer als die beiden anderen Quertraversen 18a und 18c angeordnet ist.

In einer zweiten Stellung (Figur 16B) nimmt das in Fahrtrichtung 14 gesehen hintere der Paddel 134a, 134b - in Figur 16B ist dies das Paddel 134b - eine Position ein, bei welcher sein freies Ende auf Höhe der Quertraverse 18b des Skids 12 liegt, wogegen das andere Paddel - hier das Paddel 134a - ohne Berührung unter der Quertraverse 18b des Skids 12 hindurch geführt werden kann. Fährt die Antriebseinheit 70 mit derart eingestellter Koppeleinrichtung 72 unter einem Skid 12 hindurch, so nimmt es das Skid 12 in seine Fahrrichtung mit, wenn das entsprechende Paddel 134b gegen die Quertraverse 18b des Skids 12 anstößt. Zur Abmilderung der entstehende Stoßbelastung sind an den Paddeln 134a, 134b Dämpfer vorgesehen, welche hier nicht eigens gezeigt sind. Alternativ können die Paddel 134a, 134b federnd auf der Drehachse 136 gehalten sein.

In einer dritten Stellung (vgl. Figur 16C) stehen die beiden Paddel 134a, 134b in einem Winkel von etwa 50° zur Quertraverse 18b des Skids 12 und nehmen diese zwischen sich auf.

Dadurch, daß die Paddel 134a, 134b die Quertraverse 18b des Skids 12 zwischen sich aufnehmen, kann der Skid 12 auch einem Richtungswechsel der Antriebseinheit 70 folgen und außerdem gezielt abgebremst und zum Stillstand gebracht werden.

Der entsprechende Skid 12 kann nach einem Abbremsvorgang von der Antriebseinheit 70 gelöst werden, indem die oben erläuterte erste oder zweite Stellung der Paddel 134a, 134b eingestellt wird, wodurch die vom Skid 12 gelöste Antriebseinheit in eine oder beide Richtungen unter dem Skid 12 entlang fahren kann.

Wie in Figur 1 zu erkennen ist, können geradlinie Bereiche der Führungsschiene 66 des Antriebssystems 64 durch einen gekrümmten Bereich 66a miteinander verbunden sein. Die Antriebseinheit 70 kann der dortigen Krümmung der Führungsschiene 66 in einer Kurvenfahrt folgen. Auch ein von einer Antriebseinheit 70 mitgeführter Skid 12 kann aufgrund der Verdrehbarkeit der Laufräder 32a, 32b um die Längsachse der zugehörigen Schwenkholme 34a, 34b in einer Kurve fahren und somit einer Antriebseinheit 70 im gekrümmten Bereich 66a der Führungsschiene 66 folgen, ohne daß Schienenstränge 62 zur Führung der Laufräder 32a, 32b nötig sind.

Jede der Antriebseinheiten 70 des Antriebssystems 64 kann individuell angesteuert werden, so daß ein individuelles Verfahren von Skids 12 innerhalb des Pufferbereichs 56 möglich ist.

Darüber hinaus ist die Möglichkeit vorgesehen, daß einzelne Antriebseinheiten 70 von der Führungsschiene 66 im Pufferbereich 56 herausfahren können und auf einem separaten Schienenstrang 138 zu einem anderen Einsatzbereich verfahren werden können.

Dazu sind quer zu den geradlinigen Abschnitten der Führungsschiene 66 verlaufende Querförderschienen 140 vorgesehen, auf denen eine Antriebseinheit 70 aus dem Pufferbereich 56 heraus- oder in diesen hineingefahren werden kann. Auch ein Querverfahren zwischen den zwei geradlinigen Abschnitten der Führungsschiene 66 im Pufferbereich 56 ist möglich.

Beim Querverfahren nimmt eine entsprechende Antriebseinheit 70 ein herausnehmbares Schienensegment 68 auf und führt es mit sich, wie es an und für sich bei Querfördersystemen bekannt ist.

Wie oben erläutert wurde, werden Skids 12 außerhalb des Pufferbereichs mittels eines Rollenbahnförderers 46 gefördert, wozu dieser angetriebene Transportrollen 54 umfaßt. Es gibt jedoch Behandlungsstationen für Fahrzeugkarosserien, in denen Bedingungen herrschen, welche für Antriebe wie beispielsweise die bei den angetriebenen Transportrollen 54 des Rollenförderers 46 verwendeten Nabenantriebe nicht tolerierbar sind.

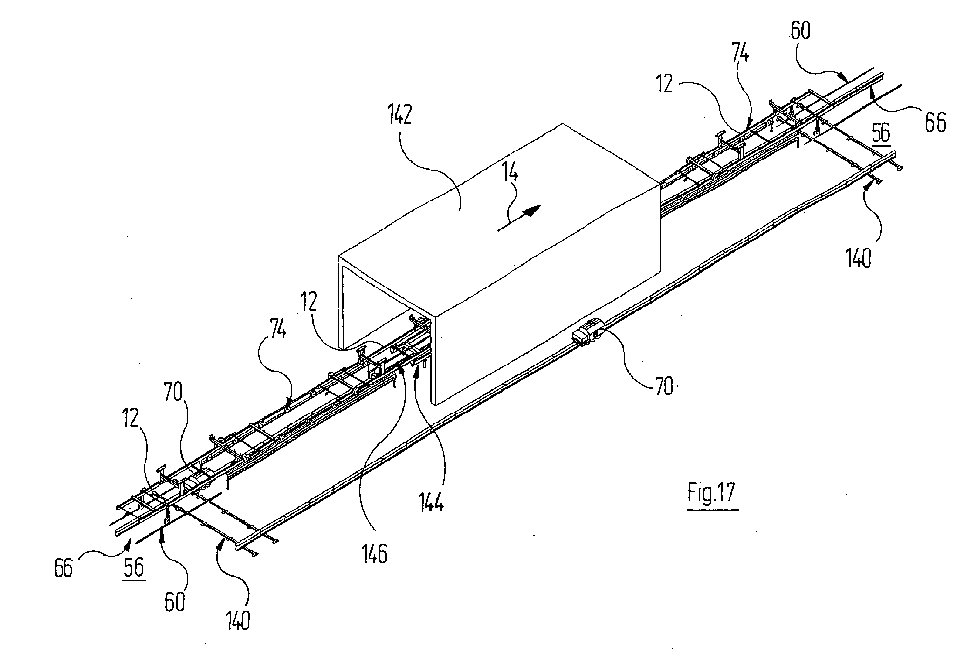

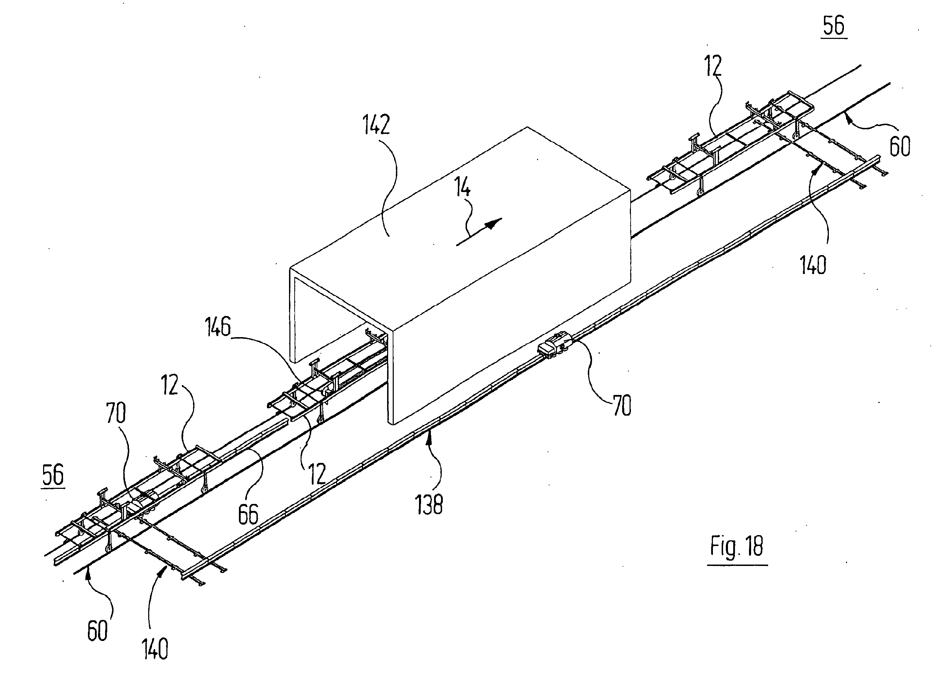

Zu solchen Behandlungsstationen zählt beispielsweise ein Trockner 142, wie er in den Figuren 17 und 18 angedeutet ist. Um nun ein Skid 12 durch eine solche Behandlungsstation zu fördern, ist bei einem ersten Ausführungsbeispiel, welches in Figur 17 gezeigt ist, innerhalb des Trockners 142 eine Rollenbahn 144 vorgesehen, welche im wesentlichen dem Rollenbahnförderer 46 entspricht, abgesehen davon, daß sie nur nicht angetriebene Transportrollen 52 umfaßt.

Zum Antrieb eines Skids 12 auf der Rollenbahn 144 verläuft mittig zwischen deren Rollenleisten 48 eine gegenüber den im Trockner 142 herrschenden Bedingungen weitgehend unempfindliche Zugeinrichtung 146, beispielsweise in Form eines auf Rollen umlaufenden Stahlseils oder einer umlaufenden Kette mit Mitnehmern, welche am Skid 12, beispielsweise an dessen Quertraverse 18b, angreifen und dieses auf der Rollenbahn 144 durch den Trockner 142 fördern.

Bei dem Ausführungsbeispiel gemäß Figur 17 ist in Förderrichung 14 gesehen vor der Rollenbahn 144 eine Übergabestation 74a vorgesehen, mittels welcher der Skid 12 in oben beschriebener Weise aus dem Pufferbereich 56 kommend auf die Rollenbahn 144 überführt wird. Dies bedeutet, daß der Skid 12 auf der Rollenbahn 144 mit den Fahrwerken 44a, 44b in ihrer Ruhestellung verfahren wird. Am gegenüberliegenden Ende des Trockners 142 ist dann eine Übergabestation 74b vorgesehen, an welche sich ein weiterer Pufferbereich 56 mit Bodenschienen 60 für die Skids 12 und auf einer Führungsschiene 66 laufenden Antriebseinheiten 70 anschließt und welcher zu einer weiteren Behandlungsstation führt.

Bei einem weiteren Ausführungsbeispiel, welches in Figur 18 gezeigt ist, sind vor und hinter dem Trokkner 142 keine Übergabestationen 74 vorgesehen. Vielmehr verlaufen die Bodenschienen 60 aus einem in Förderrichtung 14 gesehen vor dem Trockner 142 angeordneten Pufferbereich 56 kommend ohne Unterbrechung durch den Trockner 142 hindurch und münden auf der anderen Seite des Trockners 142 in einen weiteren Pufferbereich 56. Die Führungsschiene 66 des Antriebssystems 64 ist im Bereich des Trockners 142 nicht vorgesehen. Der Skid wird wie beim Ausführungsbeispiel gemäß Figur 17 innerhalb des Trockners 142 mittels der Zugeinrichtung 146 gefördert.

Im Unterschied zum Ausführungsbeispiel gemäß Figur 17 läuft der Skid 12 innerhalb des Trockners 142 hier auf seinen Laufrädern 32a, 32b, wozu die Fahrwerke 44a, 44b des entsprechenden Skids 12 in ihrer Betriebsstellung verbleiben, welche sie schon bereits im Pufferbereich 56 vor Eintritt in den Trockner 142 eingenommen haben.

In den Figuren 17 und 18 ist außerdem jeweils beispielhaft eine Einsatzmöglichkeit des oben beschriebenen Querfördersystems mit den Querförderschienen 140 angedeutet. Tritt der im Pufferbereich 56 mittels der Antriebseinheit 70 angetriebene Skid 12 in den Bereich des Trockners 142 ein, so kann die entsprechende Antriebseinheit 70 über die Querförderschiene 140 seitlich neben den Trocknerbereich 142 und über den separaten Schienenstrang 138 an dem Trockner 142 vorbei gefahren werden. Sodann kann die Antriebseinheit 70 in Förderrichtung 14 gesehen hinter dem Trockner 142 mittels weiterer Querförderschienen 140 wieder in den Fahrweg des Skids 12 verfahren werden, um diesen im dem Trockner nachgelagerten Pufferbereich 56 anzutreiben.

Bei einer Abwandlung der oben beschriebenen Förderanlage 10 kann der Rollenbahnförderer 46 durch einen Rollenbahnförderer, der nur nicht angetriebene Rollen aufweist, ersetzt sein, wobei die Förderung des Skids 12 auch im Bereich dieses Rollenbahnförderers ohne angetriebene Rollen mittels der Antriebseinheit 70 erfolgt. Dazu ist der Rollenbahnförderer ohne Antriebsrollen von der Antriebseinheit 70 unterfahrbar. Bei Verwendung der schienengeführten Antriebseinheit 70 verläuft entsprechend auch unterhalb des Rollenbahnförderers ohne Antriebsrollen eine Führungsschiene 66, auf welcher die Antriebseinheit 66 verfahrbar ist.

Bei einer weiteren Abwandlung ist zusätzlich in einem Pufferbereich 56 der Förderanlage 10 ein solcher Rollenbahnförderer vorgesehen, der nur nicht angetriebene Rollen aufweist. In diesem Fall kann die Förderanlage auch mit einem Skid betrieben werden, welcher keine von den Auflagekufen verschiedene Laufmittel aufweist, also mit einem Skid, wie er an und für sich bekannt ist. Ein derartiger bekannter Skid muss dazu einfach nachträglich mit einem Haltemittel für die Koppeleinrichtung 72 der Antriebseinheit 70 versehen werden, beispielsweise in Form einer Quertraverse, die der Quertraverse 18b des Skids 12 entspricht. Bei dieser Abwandlung der Föderanlage 10 kann auf Übergabestationen 74 verzichtet werden.

## Patentansprüche

1. Skid zum Tragen wenigstens eines Gegenstandes, ins besondere einer Fahrzeugkarosserie, welcher in einer Förderrichtung (14) innerhalb einer Förderanlage (10) förderbar ist, mit
wenigstens zwei zueinander parallelen Auflagekufen (16a, 16b);
wobei
an dem Skid (12) von den Auflagekufen (16a, 16b) verschiedene Laufmittel (32a, 32b) befestigt sind
**dadurch gekennzeichnet, dass**
die Laufmittel (32a, 32b) zwischen einer Ruhestellung und einer Betriebsstellung verstellbar sind.

2. Skid nach Anspruch 1, **dadurch gekennzeichnet, dass** die Laufmittel (32a, 32b) im Betrieb unterhalb der Auflagekufen (16a, 16b) angeordnet sind.

3. Skid nach Anspruch 1 oder 2, **dadurch gekennzeichnet, dass** die Laufmittel (32a, 32b) als eine Mehrzahl von Laufrädern (32a, 32b) ausgebildet sind, auf welchen der Skid (12) verfahrbar ist.

4. Skid nach Anspruch 3, **dadurch gekennzeichnet, dass** jedes Laufrad (32a, 32b) an einem Endbereich eines Schwenkholms (34a, 34b) angebracht ist, welcher an seinem gegenüberliegenden Endbereich verschwenkbar am Skid (12) gelagert ist.

5. Skid nach Anspruch 4, **dadurch gekennzeichnet, dass** der Schwenkholm (34a, 34b) um eine senkrecht zur Förderrichtung (14) und parallel zu einer durch die Auflagekufen (16a, 16b) vorgegebenen Ebene verlaufende Achse (38) verschwenkbar am Skid (12) gelagert ist.

6. Skid nach Anspruch 4 oder 5, **dadurch gekennzeichnet, dass** wenigstens ein Fahrwerk (44a, 44b) vorgesehen ist, welches zwei Schwenkholme (34a, 34b) mit jeweils zugehörigem Laufrad (32a, 32b) umfasst, wobei die zwei Schwenkholme (34a, 34b) des Fahrwerks (44a, 44b) starr miteinander verbunden sind.

7. Skid nach einem der Ansprüche 3 bis 6, **dadurch gekennzeichnet, dass** die Radachse (33a, 33b) wenigstens eines Laufrads (32a, 32b) in dessen Betriebsstellung um eine Achse verdrehbar ist, die senkrecht auf einer durch die Auflagekufen (16a, 16b) vorgegebenen Ebene steht.

8. Skid nach einem der Ansprüche 3 bis 7, **dadurch gekennzeichnet, dass** wenigstens eine Rasteinrichtung (42) für zumindest ein Laufrad (32a, 32b) vorgesehen ist, mittels welcher das entsprechende Laufrad (32a, 32b) wahlweise in seiner Ruhestellung oder in seiner Betriebsstellung arretierbar ist.

9. Skid nach einem der Ansprüche 1 bis 8 **dadurch gekennzeichnet, dass** in Förderrichtung (14) gesehen an jedem Ende des Skids (12) ein Teil (26, 28) einer Kupplungseinrichtung (26, 28) vorgesehen ist, so dass mehrere Skids (12) lösbar zu einem Verband verbindbar sind, in welchem die Skids (12) in Förderrichtung (14) gesehen hintereinander angeordnet sind.

10. Übergabestation für einen Skid (12) nach einem der Ansprüche 1 bis 9 zur Übergabe des Skids (12) von Fördermitteln (46), welche mit den Auflagekufen (16a, 16b) des Skids (12) zusammenwirken, zu einer Führungsstruktur (60), welche mit den Laufmitteln (32a, 32b) des Skids (12) zusammenwirkt
**dadurch gekennzeichnet, dass**
wenigstens eine Verstelleinrichtung (104) vorgesehen ist, mittels welcher die Laufmittel (32a, 32b) eines Skids (12) von einer Ruhestellung in eine Betriebsstellung oder umgekehrt überführbar sind.

11. Übergabestation nach Anspruch 10, **dadurch gekennzeichnet, dass** die Übergabestation (74a, 74b) Auflagerollen (80, 82) aufweist, über welche der Skid (12) mit seinen Auflagekufen (16a, 16b) verfahrbar ist.

## Claims

1. Skid for supporting at least one object, in particular a vehicle body, which is conveyable in a conveying direction (14) inside a conveyor installation (10), comprising
at least two support runners (16a, 16b) disposed parallel to one another,
wherein
running means (32a, 32b) different from the support runners (16a, 16b) are fastened to the skid (12),
**characterised in that**
the running means (32a, 32b) are adjustable between a rest position and an operating position.

2. Skid according to Claim 1, **characterised in that** the running means (32a, 32b) are arranged below the support runners (16a, 16b) in operation.

3. Skid according to Claim 1 or 2, **characterised in that** the running means (32a, 32b) are in the form of a plurality of running wheels (32a, 32b) on which the skid (12) can be driven.

4. Skid according to Claim 3, **characterised in that** each running wheel (32a, 32b) is mounted to an end region of a pivoted member (34a, 34b) which is mounted swivellably to the skid (12) in its opposite end region.

5. Skid according to Claim 4, **characterised in that** the pivoted member (34a, 34b) is mounted swivellably to the skid (12) about an axis (38) running perpendicularly to the conveying direction (14) and parallel to a plane defined by the support runners (16a, 16b).

6. Skid according to Claim 4 or 5, **characterised in that** at least one running gear assembly (44a, 44b) is provided which includes two pivoted members (34a, 34b) with respective associated running wheels (32a, 32b), the two pivoted members (34a, 34b) of the running gear assembly (44a, 44b) being connected rigidly to one another.

7. Skid according to any one of Claims 3 to 6, **characterised in that** the axle (33a, 33b) of at least one running wheel (32a, 32b) is rotatable in its operating position about an axis which is disposed perpendicularly to a plane defined by the support runners (16a, 16b).

8. Skid according to any one of Claims 3 to 7, **characterised in that** at least one latching device (42) for at least one running wheel (32a, 32b) is provided, by means of which the corresponding running wheel (32a, 32b) can be locked selectively in its rest position or in its operating position.

9. Skid according to any one of Claims 1 to 8, **characterised in that**, viewed in the conveying direction (14), a part (26, 28) of a coupling device (26, 28) is provided at each end of the skid (12), so that a plurality of skids (12) are connectable detachably to form a combination in which the skids (12) are arranged one behind the other in the conveying direction (14).

10. Transfer station for a skid (12) according to any one of Claims 1 to 9 for transferring the skid (12) from conveying means (46) which cooperate with the support runners (16a, 16b) of the skid (12) to a guide structure (60) which cooperates with the running means (32a, 32b) of the skid (12),
**characterised in that**
at least one adjustment device (104) is provided by means of which the running means (32a, 32b) of a skid (12) can be transferred from a rest position to an operating position or vice versa.

11. Transfer station according to Claim 10, **characterised in that** the transfer station (74a, 74b) has support rollers (80, 82) over which the skid (12) can be driven with its support runners (16a, 16b).

## Revendications

1. Skid destiné à porter au moins un objet, en particulier une carrosserie de véhicule, qui peut être transporté dans une direction de transport (14) à l'intérieur d'une installation de transport (10),
avec au moins deux patins d'appui (16a, 16b) parallèles entre eux ;
sachant que des moyens de roulement (32a, 32b) distincts des patins d'appui (16a, 16b) sont fixés sur le skid (12),
**caractérisé en ce que** les moyens de roulement (32a, 32b) peuvent être réglés entre une position de repos et une position de service.

2. Skid selon la revendication 1, **caractérisé en ce que** les moyens de roulement (32a, 32b) sont disposés, en service, en dessous des patins d'appui (16a, 16b).

3. Skid selon la revendication 1 ou 2, **caractérisé en ce que** les moyens de roulement (32a, 32b) sont réalisés sous la forme d'une pluralité de roues de roulement (32a, 32b), sur lesquelles le skid (12) peut être déplacé.

4. Skid selon la revendication 3, **caractérisé en ce que** chaque roue de roulement (32a, 32b) est installée dans une région terminale d'un montant pivotant (34a, 34b) qui, dans sa région terminale opposée, est monté à pivotement sur le skid (12).

5. Skid selon la revendication 4, **caractérisé en ce que** le montant pivotant (34a, 34b) est monté sur le skid (12) à pivotement autour d'un axe (38) s'étendant perpendiculairement à la direction de transport (14) et parallèlement à un plan prédéfini par les patins d'appui (16a, 16b).

6. Skid selon la revendication 4 ou 5, **caractérisé en ce qu'**il est prévu au moins un dispositif de roulement (44a, 44b) qui comprend deux montants pivotants (34a, 34b) avec une roue de roulement respectivement associée (32a, 32b), sachant que les deux montants pivotants (34a, 34b) du dispositif de roulement (44a, 44b) sont rigidement reliés entre eux.

7. Skid selon l'une des revendications 3 à 6, **caractérisé en ce que** l'axe de roue (33a, 33b) d'au moins une roue de roulement (32a, 32b) est, dans la position de service de celle-ci, rotatif autour d'un axe qui se dresse verticalement sur un plan prédéfini par les patins d'appui (16a, 16b).

8. Skid selon l'une des revendications 3 à 7, **caractérisé en ce qu'**il est prévu au moins un dispositif de crantage (42) pour au moins une roue de roulement (32a, 32b), au moyen duquel la roue de roulement correspondante (32a, 32b) peut être bloquée au choix dans sa position de repos ou dans sa position de service.

9. Skid selon l'une des revendications 1 à 8, **caractérisé en ce qu'**il est prévu, à chaque extrémité du skid (12) considéré dans la direction de transport (14), une partie (26, 28) d'un dispositif d'accouplement (26, 28), de sorte que plusieurs skids (12) peuvent être reliés de manière amovible pour former un convoi dans lequel les skids (12) sont disposés les uns à la suite des autres, considéré dans la direction de transport (14).

10. Poste de remise pour un skid (12) selon l'une des revendications 1 à 9, pour remettre le skid (12) de moyens de transport (46), qui coopèrent avec les patins d'appui (16a, 16b) du skid (12), à une structure de guidage (60) qui coopère avec les moyens de roulement (32a, 32b) du skid (12),
**caractérisé en ce qu'**il est prévu au moins un dispositif de réglage (104), au moyen duquel les moyens de roulement (32a, 32b) d'un skid (12) peuvent être transférés d'une position de repos dans une position de service ou réciproquement.

11. Poste de remise selon la revendication 10, **caractérisé en ce que** le poste de remise (74a, 74b) présente des galets d'appui (80, 82), sur lesquels le skid (12) peut être déplacé avec ses patins d'appui (16a, 16b).
